# EUROPEAN PATENT APPLICATION

(11) **EP 4 478 601 A1**
(43) Date of publication of application: **18.12.2024**
(21) Application number: 23791165.6
(22) Date of filing: 17.04.2023
(51) Int. Cl.: H02N 2/02

(54) **PIEZOELECTRIC MOTOR, CAMERA MODULE, AND ELECTRONIC DEVICE**

(30) Priority: 18.04.2022 CN 202210415586
(71) Applicant: Huawei Technologies Co., Ltd., Shenzhen, Guangdong 518129 (CN)
(72) Inventor: ZHANG, Bailiang, Shenzhen, Guangdong 518129 (CN); BIAN, Xinxiu, Shenzhen, Guangdong 518129 (CN); LI, Dengfeng, Shenzhen, Guangdong 518129 (CN); ZHENG, Ke, Shenzhen, Guangdong 518129 (CN); DUAN, Ran, Shenzhen, Guangdong 518129 (CN); TANG, Wei, Shenzhen, Guangdong 518129 (CN)
(74) Representative: Körber, Martin Hans
(86) International application number: PCT/CN2023/088616
(87) International publication number: WO 2023/202510

(57) **Abstract**

This application provides a piezoelectric motor, a camera module, and an electronic device. The piezoelectric motor includes a base, a mobile carrier, and a drive mechanism. The base has a mounting groove. The mobile carrier is disposed in the mounting groove and is circumferentially fastened to the base, and the mobile carrier is slidably connected to the base in an axial direction of the first through hole. The drive mechanism includes a friction piece, a drive unit, and an elastic connecting piece, and the friction piece is disposed on a peripheral surface of the mobile carrier. The drive unit includes a connection assembly and a piezoelectric oscillator connected to the connection assembly, where the connection assembly is connected to the base, the piezoelectric oscillator is provided with a driving part, and when the piezoelectric oscillator moves, the driving part can move back and forth in the axial direction of the first through hole. The elastic connecting piece can provide pre-pressure that enables the driving part to press against the friction piece, so that when the driving part vibrates, the driving part drives, by using the friction piece, the mobile carrier to move back and forth. According to the piezoelectric motor, an auto focus stroke, focusing precision, and a focusing speed of the camera module can be improved.

## Description

### CROSS-REFERENCE TO RELATED APPLICATIONS

This application claims priority to Chinese Patent Application No. 202210415586.2, filed with the China National Intellectual Property Administration on April 18, 2022 and entitled "PIEZOELECTRIC MOTOR, CAMERA MODULE, AND ELECTRONIC DEVICE", which is incorporated herein by reference in its entirety.

### TECHNICAL FIELD

This application relates to the motor field, and specifically, to a piezoelectric motor, a camera module, and an electronic device.

### BACKGROUND

Currently, a motor of a camera module of an electronic device (for example, a mobile phone) is mainly a voice coil motor. An electromagnetic driving force of the voice coil motor is positively correlated with magnetic field strength and a quantity of coil turns. With improvement of photographing technologies of the electronic device, a photosensitive chip of a camera module is increasingly large and a lens is increasingly heavy. When the lens becomes heavier, a magnet and a coil of the voice coil motor also need to become heavier. An increase of the magnet and the coil leads to an increase of a volume and weight of the entire voice coil motor. In addition, an increase of magnetic field strength also causes magnetic interference to an adjacent magnetic sensor component or electromagnetic actuator. Consequently, the voice coil motor is limited in an auto focus application scenario of an electronic device with a large load. A piezoelectric motor (which is also referred to as an ultrasonic motor) is featured in a fast response, a large power density, a large load, and no magnetic interference, and therefore gradually becomes a research hotspot, to meet a requirement for a focusing technology of a camera module of a mobile phone in the future. An existing piezoelectric motor cannot meet a requirement of a camera module for large-stroke auto focus currently due to a structural design constraint of the piezoelectric motor.

### SUMMARY

This application provides a piezoelectric motor, a camera module, and an electronic device, to increase an auto focus stroke of the camera module.

According to a first aspect, this application provides a piezoelectric motor, and the piezoelectric motor includes a base, a mobile carrier, and a drive mechanism, where the base has a mounting groove; the mobile carrier is disposed in the mounting groove and is circumferentially fastened to the base, the mobile carrier is provided with a first through hole, and the mobile carrier is slidably connected to the base in an axial direction of the first through hole; and the drive mechanism is configured to drive the mobile carrier to move back and forth relative to the base in the axial direction of the first through hole, and the drive mechanism includes a friction piece, a drive unit, and an elastic connecting piece, where the friction piece is disposed on a peripheral surface of the mobile carrier; the drive unit includes a connection assembly and a piezoelectric oscillator connected to the connection assembly, where the connection assembly is connected to the base, the piezoelectric oscillator is provided with a driving part, and when the piezoelectric oscillator moves, the driving part can move back and forth in the axial direction of the first through hole; and the elastic connecting piece can provide pre-pressure that enables the driving part to press against the friction piece in a direction perpendicular to the axial direction of the first through hole, so that when the driving part vibrates, the driving part drives, by using the friction piece, the mobile carrier to move back and forth in the axial direction of the first through hole, where a first electrical signal is applied to the piezoelectric oscillator, and the mobile carrier is driven by the driving part to move in a first direction; and then a second electrical signal is applied to the piezoelectric oscillator, the driving part moves in a second direction, and under an action of inertia movement, the mobile carrier decelerates in the first direction and then moves in the second direction along with the driving part, where the first direction is opposite to the second direction, and the first electrical signal and the second electrical signal have different loading time.

According to the piezoelectric motor in this application, the mobile carrier can slide in the axial direction of the first through hole relative to the base, the piezoelectric oscillator is connected to the base by using the connection assembly, and the driving part of the piezoelectric oscillator presses against the friction piece on the peripheral surface of the mobile carrier under an action of the elastic connecting piece. When the piezoelectric oscillator moves, the driving part may move back and forth in the axial direction of the first through hole, to drive the mobile carrier to move back and forth in the axial direction of the first through hole. Because elastic abutting instead of rigid abutting is implemented between the driving part and the friction piece by using the elastic connecting piece, the driving part may have a larger amplitude, and impact of the mobile carrier on the amplitude of the driving part in a rigid abutting case is reduced. This can increase an auto focus stroke of the piezoelectric motor.

In a possible implementation, the mobile carrier is slidably connected to the base through a guiding part, to reduce friction resistance.

In a possible implementation, the guiding part includes a first groove body disposed on the mobile carrier, a second groove body disposed on the base, and a sliding connecting piece, the first groove body and the second groove body are disposed opposite to each other, the first groove body and the second groove body jointly form a columnar accommodating groove, and the sliding connecting piece is disposed in the columnar accommodating groove, to improve sliding connection stability.

In a possible implementation, the sliding connecting piece is a ball, the ball is located in the columnar accommodating groove, and a baffle plate for preventing the ball from sliding out is disposed on the second groove body at an opening of the columnar accommodating groove. The ball is used as the sliding connecting piece, so that the friction resistance between the mobile carrier and the base can be reduced, and sliding is facilitated.

In a possible implementation, there are a plurality of balls in the columnar accommodating groove, the plurality of balls are sequentially disposed in the axial direction of the first through hole, and in the columnar accommodating groove, a diameter of a ball located at each of a bottom and a top of the columnar accommodating groove is greater than diameters of remaining balls in the columnar accommodating groove. For a plurality of balls in a same columnar concentric groove, balls near the bottom and top of the columnar accommodating groove serve as contact balls for sliding support, and remaining balls can serve a guiding function.

In a possible implementation, the sliding connecting piece is a sliding bar, the sliding bar is fastened to the base, and a protruding sliding part configured to be connected to the sliding bar is disposed on a surface of the first groove body. A surface that is of the sliding part and that is used to be in contact with the sliding bar is a cambered surface. By disposing the sliding part, a contact area between the mobile carrier and the sliding bar can be reduced, and moving resistance can be reduced.

In a possible implementation, there are at least two guiding parts, for example, there may be an even number of guiding parts. The guiding parts are symmetrically distributed in a direction of the pre-pressure, and the direction of the pre-pressure is set in a radial direction of the first through hole. In this way, sliding connecting pieces in the guiding parts on two sides bear same forces. This can balance forces on the mobile carrier and enable the mobile carrier to move more smoothly. In an optional implementation, there are four guiding parts, and every two of the four guiding parts form one group, and a connection line of two sliding connecting pieces in any group of guiding parts is perpendicular to the direction of the pre-pressure. When the sliding connecting piece is a ball, a distance between at least one group of balls at each of the bottom and the top of the columnar accommodating groove and a groove wall of the columnar accommodating groove is less than or equal to 5 µm, so that the mobile carrier maintains good stability during sliding.

In a possible implementation, a pressing contact between the driving part and the friction piece is used as a reference point, and in a circumferential direction of the first through hole, the at least two guiding parts are disposed at a distance from the reference point that is between 1/5 of circumference and 1/2 of circumference. The guiding part is disposed close to the driving part and the friction piece, and torque generated by a friction driving force is small, so that mechanical stability of an overall structure of the piezoelectric motor can be improved.

In a possible implementation, the piezoelectric motor further includes a magnetic attachment assembly, and in the direction of the pre-pressure, the magnetic attachment assembly can apply, on the mobile carrier, torque opposite to torque applied by the drive unit to the mobile carrier. In a possible implementation, the magnetic attachment assembly includes a magnet and a magnetic sheet, one of the magnet and the magnetic sheet is disposed on the base, and the other is disposed on the mobile carrier. The magnetic attachment assembly may provide a tilt correction force, and generated magnetic attachment torque may overcome combined torque generated by gravity and the friction driving force, to enhance mechanical balance of the entire piezoelectric motor. In addition, a magnetic attracting force can also avoid pre-pressure fluctuation of the drive unit caused by different loads, to maintain output stability of the drive unit.

In an optional implementation, the elastic connecting piece is disposed between the mobile carrier and the friction piece, and the elastic connecting piece is in a force accumulation state to provide, in a direction perpendicular to the axial direction of the first through hole, an acting force for the friction piece to approach the driving part, so that the friction piece presses against the driving part. The elastic connecting piece includes a spring plate, an avoidance groove is disposed on an outer circumferential surface of the mobile carrier, the spring plate is fastened to a groove opening of the avoidance groove, and the spring plate bends toward the avoidance groove when the spring plate is in a force accumulation state. The deformed spring plate can keep the friction piece and the driving part pressing against each other.

In an optional implementation, the connection assembly includes a vertical plate, the vertical plate is perpendicular to and fastened to the base, and the piezoelectric oscillator is fastened to the vertical plate. The vertical plate may be disposed on a side that is of the piezoelectric oscillator and that is away from the driving part, to facilitate installation and fastening.

In an optional implementation, the elastic connecting piece is disposed between the base and the drive unit, and the elastic connecting piece is in a force accumulation state to provide, in the direction perpendicular to the axial direction of the first through hole, an acting force for the driving part to approach the friction piece, so that the driving part presses against the friction piece. The elastic connecting piece is disposed between the base and the drive unit, and a size of the friction piece is not limited by the elastic connecting piece, so that a driving stroke of the piezoelectric motor can be further increased.

In an optional implementation, the connection assembly includes a first connection arm, one end of the first connection arm is connected to the piezoelectric oscillator, and the other end is connected to the base; the elastic connecting piece includes a spring wire, one end of the spring wire is connected to the piezoelectric oscillator, and the other end is connected to the base; and the first connection arm and the elastic connecting piece are respectively disposed on two sides of the driving part of the piezoelectric oscillator. By adjusting disposing positions of the spring wire and the first connection arm, and by using an elastic force of the spring wire, the driving part may press against the friction piece.

In an optional implementation, the first connection arm is hinged with the base. Optionally, the end that is of the first connection arm and that is configured to be connected to the base is provided with a hinge groove, and the base is provided with a hinge pillar that fits the hinge groove. In this way, a connection position between the first connection arm and the base can be easily adjusted, and the elastic connecting piece is adjusted, so that the driving part presses against the friction piece.

In an optional implementation, the elastic connecting piece further includes a second connection arm connected to the spring wire, and the spring wire is connected to the base through the second connection arm. Optionally, one end that is of the second connection arm that is configured to be connected to the base is provided with a fastening hole, and the base is provided with a protruding pillar that is in a fitting connection to the fastening hole. The structure facilitates installation and fastening of the elastic connecting piece.

In an optional implementation, the connection assembly includes a vertical plate and a bottom plate fastened to the vertical plate, the piezoelectric oscillator is connected to the vertical plate, the base and the bottom plate are slidably connected in the direction of the pre-pressure, the elastic connecting piece is disposed between the base and the bottom plate, and the elastic connecting piece is in a pulled state to enable, through the bottom plate, the driving part to press against the friction piece. The elastic connecting piece includes a first end part, a second end part, and a serpentine leaf spring or an arch-shaped leaf spring disposed between the first end part and the second end part, the first end part includes a connection part connected to the base, and the second end part is connected to the bottom plate.

In an optional implementation, the first end part further includes a presser, the bottom plate is provided with a pressed protrusion part that fits the presser, and the presser exerts an acting force on the pressed protrusion part toward the base. The piezoelectric oscillator can be prevented from tilting under the pre-pressure with the acting force applied on the bottom plate toward the base.

In an optional implementation, the base is provided with a guide block, and the bottom plate is provided with a guide groove that fits the guide block; or the base is provided with a guide groove, and the bottom plate is provided with a guide block that fits the guide groove. This facilitates assembly of the base and the bottom plate, so that the base and the bottom plate only have relative displacement in the direction of the pre-pressure.

In an optional implementation, the piezoelectric oscillator includes a bearing plate and piezoelectric ceramic sheets disposed on surfaces of two sides of the bearing plate, and a plate surface of the bearing plate is perpendicular to the axial direction of the first through hole. The piezoelectric ceramic sheet deforms under an action of an electrical signal, to drive the bearing plate to deform, so that the driving part vibrates.

In an optional implementation, the driving part is a first protrusion part disposed on the bearing plate. The first protrusion part is a triangular cantilever, and a pressing surface that is of the triangular cantilever and that is used to press against the friction piece is a curved surface or a plane, for example, may be a protruding cambered surface.

In an optional implementation, the first protrusion part is provided with a hole, and the hole penetrates the first protrusion part in the axial direction of the first through hole. The amplitude of the driving part can be amplified by disposing the hole, and an output force of the piezoelectric motor can be increased.

In an optional implementation, the bearing plate is of a rectangular structure, the driving part is disposed on a first side edge of the bearing plate, a beam is disposed on a second side edge that is of the bearing plate and that is away from the driving part, and a connection point between the beam and the bearing plate is a vibration node of the bearing plate. The connection point between the beam and the bearing plate is disposed at the vibration node. This can reduce impact of the beam on vibration of the piezoelectric oscillator and help improve output performance of the piezoelectric oscillator.

In an optional implementation, the beam is provided with a notch. By disposing the notch, adverse vibration of the beam can be reduced, vibration energy loss can be reduced, and the output performance of the piezoelectric oscillator can be improved.

In an optional implementation, the bearing plate is further provided with a second protrusion part and a third protrusion part, and the second protrusion part and the third protrusion part are symmetrically disposed on two sides of the first protrusion part along a perpendicular line of the first side edge. The second protrusion part and the third protrusion part may serve as counterweights of the piezoelectric oscillator, to balance a weight on one side of the driving part and a weight on one side of the beam, to increase the amplitude of the driving part.

In an optional implementation, the piezoelectric motor further includes a flexible circuit board, and both a positive electrode and a negative electrode of the piezoelectric ceramic sheet are connected to the flexible circuit board.

In an example implementation, one of the positive electrode and the negative electrode of the piezoelectric ceramic sheet is led out from the bearing plate, and the other is disposed on a surface that is of the piezoelectric ceramic plate and that is away from the bearing plate.

In an example implementation, both the positive electrode and the negative electrode of the piezoelectric ceramic sheet are led out from a surface that is of the piezoelectric ceramic sheet and that is away from the bearing plate.

In an example implementation, the flexible circuit board is separately in contact with surfaces that are of the two piezoelectric ceramic sheets of the bearing plate and that are away from the bearing plate.

In an example implementation, the piezoelectric motor further includes a clamping spring plate, the clamping spring plate includes a U-shaped clamping part and a third connection arm connected to the U-shaped clamping part, the U-shaped clamping part is clamped on surfaces of the piezoelectric ceramic sheets on two sides of the piezoelectric oscillator, and the third connection arm is connected to the connection assembly. An electrode leading-out end of the piezoelectric oscillator may be led out to a position of the connection assembly by disposing the clamping spring plate, to facilitate connection to an external circuit.

In an example implementation, the U-shaped clamping part includes a first clamping jaw and a second clamping jaw, the first clamping jaw presses against one piezoelectric ceramic sheet of the piezoelectric oscillator, and the second clamping jaw presses against the other piezoelectric ceramic sheet of the piezoelectric oscillator. The first clamping jaw and the second clamping jaw are configured to clamp the U-shaped clamping part and the piezoelectric oscillator.

In an example implementation, the first clamping jaw is provided with a first clamping protrusion, the second clamping jaw is provided with a second clamping protrusion, and the first clamping protrusion and the second clamping protrusion are soldered or bonded to the piezoelectric ceramic sheet. By soldering or bonding, connection strength between the U-shaped clamping part and the piezoelectric oscillator is increased.

In an example implementation, each of the first clamping protrusion and the second clamping protrusion is provided with a through hole, and the through hole is used to be filled with solder or a conductive adhesive. The through hole is disposed to fill solder or a conductive adhesive, to implement soldering or bonding.

In an example implementation, the through hole is disposed corresponding to a geometric center of the piezoelectric ceramic sheet. In this implementation, a connection position of the U-shaped connection part and the piezoelectric oscillator may be set at a geometric center position of the piezoelectric ceramic sheet, namely, a wave crest position in a vibration mode of the piezoelectric oscillator, to reduce impact of an additional weight on vibration of the piezoelectric oscillator.

According to a second aspect, this application provides a camera module. The camera module includes a lens assembly, an image sensor, and the piezoelectric motor in the first aspect of this application, a mounting groove of a base is a through groove and is disposed coaxially with a first through hole, the first through hole includes a light entry side and a light exit side in an axial direction of the first through hole, the lens assembly is disposed in the first through hole on the light entry side and is connected to the mobile carrier, and the image sensor is disposed on the light exit side and is fastened to the base.

The camera module in this application has a drive motor in the first aspect of this application. Therefore, the camera module has advantages of a large auto focus stroke, high focusing precision, and a high focusing speed.

According to a third aspect, this application provides an electronic device, including the camera module in the second aspect.

The electronic device includes but is not limited to devices such as a mobile phone, a tablet computer, a notebook computer, a watch, and a camera.

For technical effects that may be implemented in the second aspect and the third aspect, refer to corresponding effect descriptions in the first aspect. Details are not described herein again.

### BRIEF DESCRIPTION OF DRAWINGS

FIG. 1 is a diagram of a structure of an electronic device according to an embodiment;
FIG. 2 is a diagram of a structure of a camera module according to an embodiment;
FIG. 3 is a diagram of an exploded structure of a piezoelectric motor according to an embodiment;
FIG. 4 is a diagram of a structure of a base according to an embodiment;
FIG. 5 is a diagram of a structure of a mobile carrier according to an embodiment;
FIG. 6 is a diagram of a structure of a piezoelectric motor according to an embodiment;
FIG. 7 is a diagram of a cross-sectional structure along A-A in the structure shown in FIG. 6;
FIG. 8 is a diagram of a structure of a connection between a drive mechanism and a mobile carrier according to an embodiment;
FIG. 9 is a diagram of an enlarged structure of a position B in FIG. 8;
FIG. 10 is a diagram of a structure of a piezoelectric motor according to another embodiment;
FIG. 11 is a diagram of a structure of a connection between a drive mechanism and a mobile carrier according to an embodiment;
FIG. 12 is a diagram of a structure of a drive unit according to an embodiment;
FIG. 13 is a diagram of a connection structure of a drive mechanism of another piezoelectric motor;
FIG. 14 is a diagram of a cross-sectional structure along B-B in FIG. 13;
FIG. 15 is a diagram of a connection structure between a bottom plate and a base according to an embodiment;
FIG. 16 is a diagram of a structure of an elastic connecting piece according to an embodiment;
FIG. 17 is a diagram of a structure of a piezoelectric oscillator according to an embodiment;
FIG. 18 is a diagram of an exploded structure of a piezoelectric oscillator according to an embodiment;
FIG. 19 is a diagram of a structure of a piezoelectric oscillator according to another embodiment;
FIG. 20 is a diagram of a structure of a piezoelectric oscillator according to another embodiment;
FIG. 21 is a diagram of a structure of a piezoelectric oscillator according to another embodiment;
FIG. 22 is a diagram of a vibration mode of a piezoelectric oscillator according to an embodiment;
FIG. 23 is a diagram of an electrode connection relationship of a piezoelectric oscillator according to an embodiment;
FIG. 24 is a diagram of an electrode connection relationship of another piezoelectric oscillator according to an embodiment;
FIG. 25 is a diagram of a connection structure between a piezoelectric oscillator and a flexible circuit board according to an embodiment;
FIG. 26 is a diagram of a connection structure of a piezoelectric oscillator according to another embodiment;
FIG. 27 is a diagram of a structure of a clamping spring plate;
FIG. 28 is a diagram of a structure of a connection assembly according to an embodiment;
FIG. 29 is a diagram of an assembly structure of a guiding part according to an embodiment;
FIG. 30 is a diagram of a structure of a first groove body of a mobile carrier according to an embodiment;
FIG. 31 is a diagram of a structure of a guiding part according to another embodiment of this application;
FIG. 32 is a diagram of a contact structure between the guiding part in the structure shown in FIG. 31 and a mobile carrier;
FIG. 33 is a diagram of a structure of a piezoelectric motor according to an embodiment;
FIG. 34 is a diagram of a structure of a piezoelectric motor according to another embodiment;
FIG. 35 is a diagram of a structure of a piezoelectric motor according to another embodiment;
FIG. 36 is a diagram of a phase-A signal and a phase-B signal applied to a positive electrode and a negative electrode of a piezoelectric oscillator according to an embodiment;
FIG. 37 is a diagram of a waveform of a combined drive signal applied to a piezoelectric oscillator;
FIG. 38 is a diagram of a phase-A signal and a phase-B signal applied to a positive electrode and a negative electrode of a piezoelectric oscillator according to another embodiment;
FIG. 39 is a diagram of a waveform of a combined drive signal applied to a piezoelectric oscillator; and
FIG. 40 is a diagram of a triangular wave signal applied to a piezoelectric oscillator according to an embodiment.

### Reference numerals:

001: electronic device; 01: housing; 02: processor; 03: camera module; 10: lens assembly; 20: piezoelectric motor;
21: base; 211: mounting groove; 212: first limiting part; 213: hinge pillar; 214: protruding pillar; 215: guide block;
22: mobile carrier; 221: first through hole; 222: second limiting part; 223: avoidance groove; 23: drive mechanism;
31: friction piece; 32: drive unit; 321: connection assembly; 3211: vertical plate; 3212: first connection arm;
3212a: hinge groove; 3213: bottom plate; 3213a: guide groove; 3214: pressed protrusion part; 322: piezoelectric oscillator;
323: driving part; 33: elastic connecting piece; 331: spring wire; 332: second connection arm; 333: fastening hole;
334: first end part; 3341: connection part; 3342: presser; 335: second end part; 336: curved leaf spring; 24: external cover;
25: flexible circuit board; 26: position sensor; 41: bearing plate; 41a: first side edge; 41b: second side edge;
41c: third side edge; 41d: fourth side edge; 41e: first surface; 41f: second surface; 411: hole; 412: connecting piece;
413: beam; 414: notch; 415: second protrusion part; 416: third protrusion part; 42: piezoelectric ceramic sheet; 43: bonding layer;
44: insulation tape; 51: guiding part; 511: first groove body; 512: second groove body; 513: ball; 514: baffle plate;
515: sliding bar; 516: sliding part; 61: magnetic attachment assembly; 611: magnet; 612: magnetic sheet;
70: clamping spring plate; 71: U-shaped clamping part; 711: first clamping jaw; 712: second clamping jaw; 713: first clamping protrusion; and
714: second clamping protrusion; 715: through hole; 72: third connection arm; and 73: conductive circuit board.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

For ease of understanding of a piezoelectric motor in this application, the following first describes an application scenario of the piezoelectric motor.

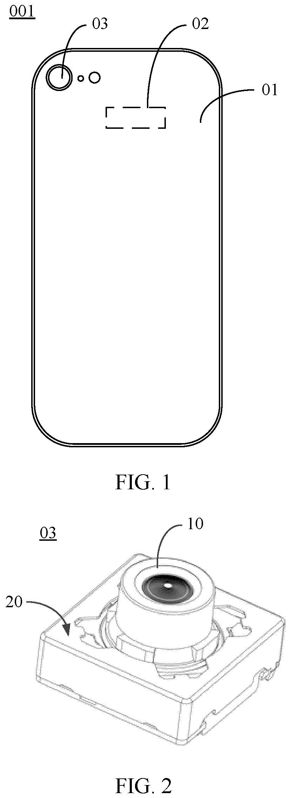

The piezoelectric motor may be used in a camera module of an electronic device. The electronic device includes but is not limited to a mobile phone, a tablet computer, a notebook computer, a phone watch, a mobile camera apparatus, and the like. FIG. 1 is a diagram of a structure of an electronic device. A mobile phone is used as an example. An electronic device 001 may include a housing 01, and a processor 02, a display module (not shown in the figure), and a camera module 03 that are disposed inside the housing. In addition, the electronic device 001 may further include components such as a speaker, a receiver, an antenna, and a microphone that are not shown in the figure. The housing 01 is further divided into a front cover plate and a rear cover plate. A camera module 03 may be disposed on each of the front cover plate and the rear cover plate of the housing 01. For example, a camera hole is disposed on the rear cover plate, and the camera module 03 is disposed inside the housing 01, and collects light through the camera hole on the rear cover plate, to take an image. Both the camera module 03 and the display module are electrically connected to the processor 02. The processor 02 controls the camera module 03 to perform photographing. The camera module 03 transfers collected image information to the processor 02, and displays an image in the display module.

The following describes a structure of the camera module with reference to FIG. 2. FIG. 2 is a diagram of a structure of a camera module. A camera module 03 shown in FIG. 2 may be used as a front-facing camera of an electronic device, or may be used as a rear-facing camera of the electronic device. This is not strictly limited herein. As shown in FIG. 2, in some embodiments, the camera module 03 may include a lens assembly 10 and a piezoelectric motor 20. The lens assembly 10 is mounted on a light entry side of the piezoelectric motor 20. The piezoelectric motor 20 may drive the lens assembly 10 to move back and forth along an optical axis of the lens assembly 10, to implement auto focus of the camera module 03.

The camera module 03 further includes an image sensor (not shown in the figure) and a circuit board (not shown in the figure). The image sensor may be fastened to the circuit board and electrically connected to the circuit board. The circuit board may be fastened to the piezoelectric motor 20. The circuit board is disposed on a light exit side of the piezoelectric motor 20. The image sensor is configured to: receive an optical signal converged from the lens assembly 10, and convert the optical signal into an electrical signal. The formed electrical signal may be transmitted to the processor of the electronic device by using the circuit board.

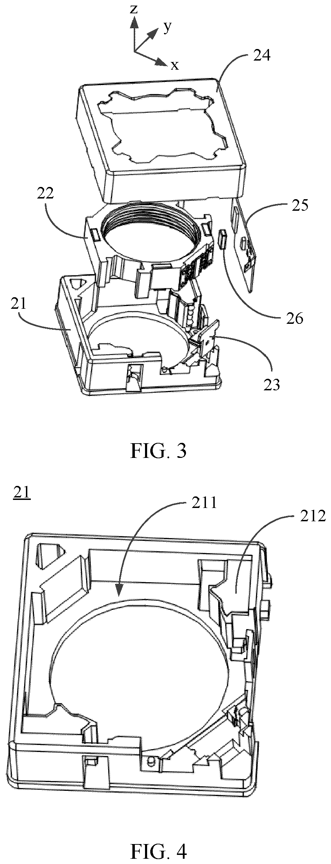

The following describes a structure of the piezoelectric motor with reference to FIG. 3. FIG. 3 is a diagram of an exploded structure of a piezoelectric motor according to an embodiment. As shown in FIG. 3, in some embodiments, a piezoelectric motor 20 may include a base 21, a mobile carrier 22, and a drive mechanism 23. In addition, the piezoelectric motor 20 may further include an external cover 24. The external cover 24 is fastened to the base 21, and the external cover 24 and the base 21 jointly form a housing of the piezoelectric motor 20. Both the mobile carrier 22 and the drive mechanism 23 are disposed inside the housing of the piezoelectric motor 20. The external cover 24 and the base 21 may be fastened in a plurality of manners of connection by using a buckle, bonding, soldering, connection by using a fastener or the like. This is not specifically limited herein.

The following describes a base of a piezoelectric motor with reference to FIG. 3 and FIG. 4. FIG. 4 is a diagram of a structure of a base according to an embodiment. As shown in FIG. 4, a base 21 is provided with a mounting groove 211 for assembling a mobile carrier 22. The mounting groove 211 of the base 21 is a through groove, and an axis of the through groove may coincide with an optical axis (a direction z shown in FIG. 3) of a lens assembly. The base 21 may be of a square structure, a rectangular structure, a circular structure, or another structure. This is not specifically limited herein. In an embodiment of this application, the base 21 is selected as a square structure, to facilitate processing, manufacturing, and installation, and facilitate structural balance of a piezoelectric motor. A first limiting part 212 is disposed in the mounting groove 211 of the base 21, and the first limiting part 212 may be a limiting block disposed on a side wall of the mounting groove 211. After the mobile carrier 22 is assembled to the mounting groove 211, the first limiting part 212 may be used to limit relative movement of the mobile carrier 22 and the base 21 in a circumferential direction.

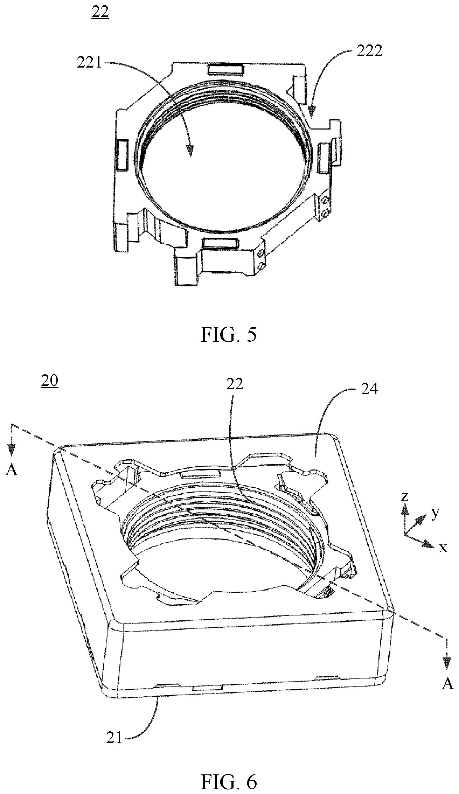

The following describes the mobile carrier of the piezoelectric motor with reference to FIG. 3 to FIG. 5. FIG. 5 is a diagram of a structure of a mobile carrier according to an embodiment. As shown in FIG. 3 to FIG. 5, in some embodiments, the mobile carrier 22 is assembled to the mounting groove 211 of the base 21, the mobile carrier 22 is provided with a first through hole 221, and an axis of the first through hole 221 is coaxially disposed with the optical axis of the lens assembly. A second limiting part 222 cooperating with the first limiting part 212 is disposed on an outer circumferential surface of the mobile carrier 22, and the second limiting part 222 may be a limiting groove fitting the limiting block. After the first limiting part 212 and the second limiting part 222 cooperate with each other, the mobile carrier 22 and the base 21 may remain relatively static in the circumferential direction of the mobile carrier 22, so that the mobile carrier 22 and the base 21 are fastened in the circumferential direction.

With reference to FIG. 3 and FIG. 5, the mobile carrier 22 and the base 21 may move relatively in an axial direction of the first through hole 221, namely, in the direction z shown in FIG. 3, and the mobile carrier 22 and the base 21 are slidably connected in the axial direction of the first through hole 221. Therefore, the mobile carrier 22 may move back and forth with the base 21 in the direction z under action of the drive mechanism 23.

The following describes several forms of a drive mechanism with reference to FIG. 6 to FIG. 16.

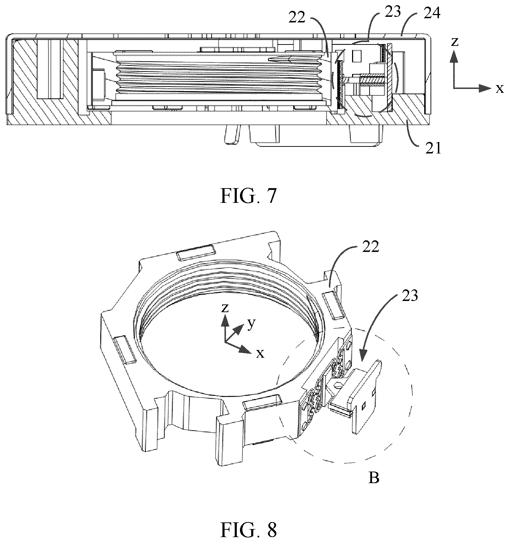

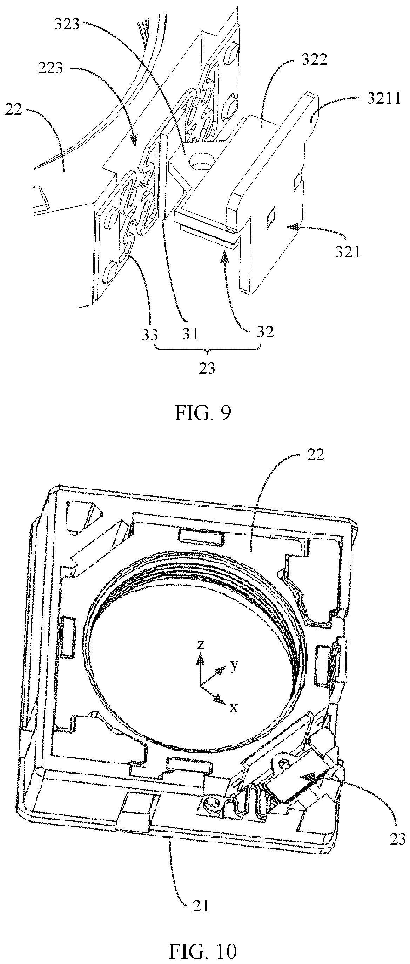

FIG. 6 to FIG. 9 are diagrams of structures of a piezoelectric motor according to an embodiment. Specifically, FIG. 6 is a diagram of a structure of a piezoelectric motor according to an embodiment. FIG. 7 is a diagram of a cross-sectional structure along A-A in the structure shown in FIG. 6. FIG. 8 is a diagram of a structure of a connection between a drive mechanism and a mobile carrier according to an embodiment. FIG. 9 is a diagram of an enlarged structure of a position B in FIG. 8.

Refer to FIG. 6 and FIG. 7. In an embodiment, when a base 21 is of a square structure, a drive mechanism 23 may be disposed at a corner of the base 21, to make full use of installation space of the base 21, and reduce a size of a piezoelectric motor 20.

Refer to FIG. 8 and FIG. 9. The drive mechanism 23 may include a friction piece 31, a drive unit 32, and an elastic connecting piece 33. In an embodiment, the elastic connecting piece 33 may be a spring plate, or may be an elastomer like foam or a spring. For ease of a connection, in this embodiment of this application, the elastic connecting piece 33 is the spring plate, the spring plate may be disposed between the mobile carrier 22 and the friction piece 31, and the spring plate may be fastened to the mobile carrier 22. In this case, the friction piece 31 may be fastened to the mobile carrier 22 by using the spring plate. An avoidance groove 223 is disposed at a part that is on an outer circumferential surface of the mobile carrier 22 and that corresponds to the friction piece 31, the spring plate is disposed at a groove opening of the avoidance groove 223, and the spring plate may bend toward the avoidance groove 223 after being subject to a force.

Still refer to FIG. 8 and FIG. 9. In an embodiment, the drive unit 32 may include a connection assembly 321 and a piezoelectric oscillator 322 connected to the connection assembly 321. Refer to FIG. 6 to FIG. 9. The connection assembly 321 may be connected to the base 21 and is configured to fasten the piezoelectric oscillator 322. The piezoelectric oscillator 322 is provided with a driving part 323. When the piezoelectric oscillator 322 moves, the driving part 323 can move back and forth in the axial direction (namely, the direction z shown in FIG. 6) of the first through hole of the mobile carrier 22. A structure and a vibration principle of the piezoelectric oscillator 322 are described below. The following first describes an interconnection relationship between the friction piece 31, the drive unit 32, and the elastic connecting piece 33.

As shown in FIG. 7 and FIG. 9, the connection assembly 321 may include a vertical plate 3211, and the vertical plate 3211 is fastened to the base 21. The vertical plate 3211 may be fastened to the base 21 in a manner of soldering, bonding, clamping, or the like. A plate surface of the vertical plate 3211 may be perpendicular to the base 21, and the vertical plate 3211 is disposed on a side that is of the piezoelectric oscillator 322 and that is away from the driving part 323.

Still refer to FIG. 6 to FIG. 9. The driving part 323 of the piezoelectric oscillator 322 is configured to press against the friction piece 31. In the drive mechanism 23, after the vertical plate 3211 is fastened to the base 21, the driving part 323 applies a specific squeezing force to the friction piece 31. Under the squeezing force, the elastic connecting piece 33 deforms to a specific extent. In this case, the elastic connecting piece 33 is in a force accumulation state, to provide, in a direction (namely, a direction x shown in FIG. 6) perpendicular to the axial direction of the first through hole 221, an acting force for the friction piece 31 to approach the driving part 323, so that the friction piece 31 presses against the driving part 323. Pre-pressure applied by the driving part 323 to the friction piece 31 is in a radial direction (namely, a reverse direction of the direction x shown in FIG. 6) of the first through hole 221. By applying the pre-pressure, the friction piece 31 and the driving part 323 may always keep pressing against each other. In this way, when the driving part 323 moves, the driving part 323 may drive, by using the friction piece 31, the mobile carrier 22 to move back and forth in the direction z. The drive mechanism 23 may implement auto focus with a large stroke greater than 2 mm, and the drive mechanism 23 may implement self-locking through friction.

Refer to FIG. 8 and FIG. 9. It may be understood that, when the elastic connecting piece 33 is a spring plate, the spring plate needs to have large rigidities in the direction z and a direction y (namely, a plane direction of the spring plate), and needs to have a large torsion rigidity, to prevent the spring plate from twisting during movement. In addition, the spring plate needs to have a small rigidity in the direction x, so that the spring plate generates sufficient elastic deformation, to provide an acting force for the driving part 323 and the friction piece 31 to press against each other.

The following describes another piezoelectric motor with a drive mechanism with reference to FIG. 10 to FIG. 12.

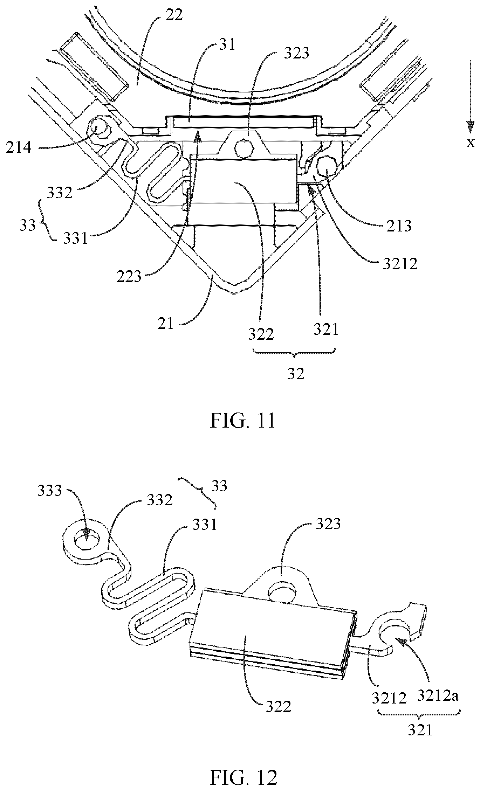

FIG. 10 is a diagram of a structure of a piezoelectric motor according to another embodiment. FIG. 11 is a diagram of a structure of a connection between a drive mechanism and a mobile carrier. FIG. 12 is a diagram of a structure of a drive unit according to an embodiment. As shown in FIG. 10 and FIG. 11, a friction piece 31 may be a rigid friction plate, and the friction plate may be directly fastened to a mobile carrier 22, for example, may be fastened to an avoidance groove 223 on a peripheral side surface of the mobile carrier 22. A connection assembly 321 of a drive unit 32 may include a first connection arm 3212, one end of the first connection arm 3212 is connected to a piezoelectric oscillator 322, and the other end is connected to a base 21. Refer to FIG. 12. One end that is of the first connection arm 3212 and that is configured to be connected to the base 21 is provided with a hinge groove 3212a, and the base 21 is provided with a hinge pillar 213 that fits the hinge groove 3212a. The first connection arm 3212 may be hinged with the base 21 by using the hinge groove 3212a and the hinge pillar 213.

As shown in FIG. 11 and FIG. 12, the elastic connecting piece 33 includes a spring wire 331, one end of the spring wire 331 is connected to the piezoelectric oscillator 322, and the other end is connected to the base 21. Still refer to FIG. 11. In an embodiment, the elastic connecting piece 33 may further include a second connection arm 332, and the spring wire 331 is connected to the base 21 through the second connection arm 332. One end that is of the second connection arm 332 that is configured to be connected to the base 21 is provided with a fastening hole 333, and the base 21 is provided with a protruding pillar 214 that is in a fitting connection to the fastening hole 333.

Refer to FIG. 11 and FIG. 12. The first connection arm 3212 and the elastic connecting piece 33 are respectively disposed on two sides of a driving part 323. The elastic connecting piece 33 is connected to the base 21. After the connection, the elastic connecting piece 33 is in a force accumulation state. The elastic connecting piece 33 may provide, in a direction x shown in FIG. 11, an acting force for the driving part 323 to approach the friction piece 31, so that the driving part 323 presses against the friction piece 31.

The drive mechanism may implement auto focus with an ultra-large stroke greater than 5 mm, and the drive mechanism may implement self-locking through friction. In a camera module, pre-pressure applied by a drive mechanism is generally dozens of times of gravity, and a generated static friction force is also dozens of times of gravity, to lock a position of a mobile carrier, and implement a capability of resisting shake in photographing in a moving scenario.

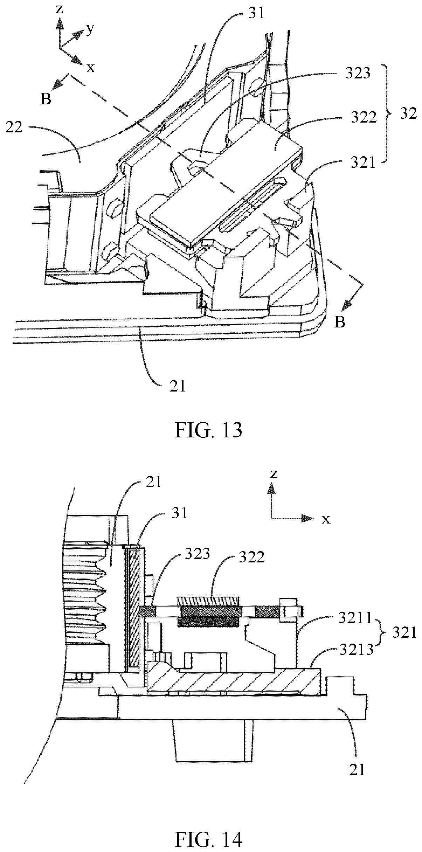

The following describes another piezoelectric motor with a drive mechanism with reference to FIG. 13 to FIG. 16.

FIG. 13 is a diagram of a connection structure of a drive mechanism of another piezoelectric motor. FIG. 14 is a diagram of a cross-sectional structure along B-B in FIG. 13. As shown in FIG. 13 and FIG. 14, in some embodiments, a friction piece 31 may be a rigid friction plate, and the friction plate may be directly fastened to an outer circumferential surface of a mobile carrier 22. A driving part 323 in the drive unit 32 presses against the friction piece 31, and a connection assembly 321 in the drive unit 32 may include a vertical plate 3211 and a bottom plate 3213, and a piezoelectric oscillator 322 is fastened to the vertical plate 3211. The vertical plate 3211 is vertically connected to a base 21, the bottom plate 3213 is disposed in parallel with the base 21, the vertical plate 3211 is fastened to the bottom plate 3213, and the bottom plate 3213 is slidably connected to the base 21 in a direction (a direction x shown in the figure) in which the driving part 323 presses against the friction piece 31.

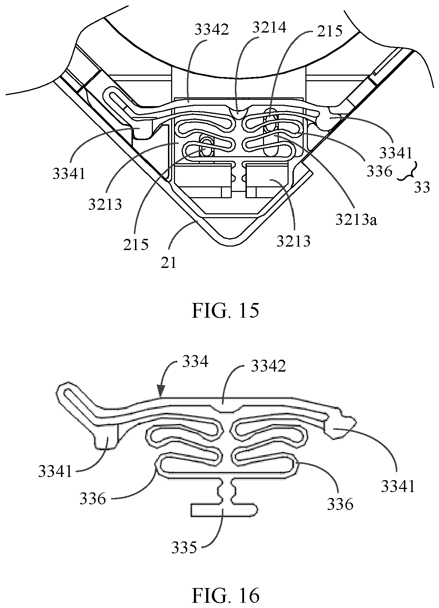

FIG. 15 is a diagram of a connection structure between a bottom plate and a base according to an embodiment. As shown in FIG. 15, one of a base 21 and a bottom plate 3213 may be provided with a guide block 215, and the other may be provided with a guide groove 3213a, so that the bottom plate 3213 is slidably connected to the base 21. For example, the base 21 is provided with a guide block 215, and the bottom plate 3213 is provided with a guide groove 3213a that fits the guide block 215; or the base 21 is provided with a guide groove, and the bottom plate 3213 is provided with a guide block that fits the guide groove. In addition, the guide block 215 and the guide groove 3213a are disposed, so that sliding of the bottom plate 3213 can be limited, and the bottom plate 3213 slides on the base 21 within a specific range.

As shown in FIG. 15, an elastic connecting piece 33 is disposed between the base 21 and the bottom plate 3213. One end of the elastic connecting piece 33 may be fastened to the base 21, and the other end may be fastened to the bottom plate 3213. Refer to FIG. 14. When a driving part 323 presses against a friction piece 31, the elastic connecting piece 33 is in a pulled state, so that specific pre-pressure is applied to the driving part 323 and the friction piece 31.

FIG. 16 is a diagram of a structure of an elastic connecting piece according to an embodiment. As shown in FIG. 16, in an embodiment, an elastic connecting piece 33 includes a first end part 334, a second end part 335, and a curved leaf spring 336 disposed between the first end part 334 and the second end part 335. For example, the curved leaf spring 336 may be a serpentine leaf spring or an arch-shaped leaf spring. The arch-shaped leaf spring or the serpentine leaf spring is symmetrically disposed in a direction of pre-pressure, to improve force uniformity.

As shown in FIG. 15 and FIG. 16, the first end part 334 includes a connection part 3341 connected to the base 21. There may be a plurality of, for example, two, three, or four connection parts 3341. In an embodiment of this application, there are two connection parts 3341, and the two connection parts 3341 are respectively disposed on two sides of the bottom plate 3213 and are fastened to the base 21. The connection part 3341 may be fastened to the base 21 in a manner of clamping, soldering, bonding, or the like. After the connection part 3341 is fastened to the base 21, the serpentine leaf spring or the arch-shaped leaf spring is pressed on a surface of the bottom plate 3213. The second end part 335 is connected to an end part of the serpentine leaf spring or the arch-shaped leaf spring, where the second end part 335 may be a ± (a Chinese character that means earth)-shaped structure or a T-shaped structure, and the second end part 335 is fastened to the bottom plate 3213. It may be understood that, a fastening groove that fits the ± (a Chinese character that means earth)-shaped structure or the T-shaped structure may be further disposed on the bottom plate 3213, to fasten the second end part 335.

Still refer to FIG. 15 and FIG. 16. In an embodiment, the first end part 334 further includes a presser 3342. The presser 3342 is disposed between the two connection parts 3341. In addition, the bottom plate 3213 is provided with a pressed protrusion part 3214 that fits the presser 3342. The presser 3342 exerts an acting force on the pressed protrusion part 3214 toward the base 21. Refer to FIG. 14. In this way, when the driving part 323 is subject to a reacting force of the friction piece 31 to generate upward turning torque, the acting force applied by the presser 3342 to the pressed protrusion part 3214 may generate opposite torque, to maintain stability of a drive mechanism. The presser 3342 and the serpentine leaf spring or the arch-shaped leaf spring may be of an integrated structure, or may be of a split structure. This is not specifically limited herein.

The foregoing describes several examples of specific connection manners of the drive unit 32, the friction piece 31, and the elastic connecting piece 33 in the drive mechanism 23. The following explains and describes a working principle of the drive unit 32. The drive unit 32 implements driving by using a piezoelectric driving technology. Specifically, the piezoelectric oscillator 322 in the drive unit 32 mechanically deforms, based on a piezoelectric inverse effect of a piezoelectric material, the piezoelectric material by applying a control electrical signal to the piezoelectric material. After a periodic electrical signal is applied, the piezoelectric material may periodically deform with the applied periodic electrical signal, to move periodically. For example, the piezoelectric material may be an inorganic piezoelectric material, such as a piezoelectric crystal or a piezoelectric ceramic, or may be an organic piezoelectric material, such as polyvinyl fluoride. A type of the piezoelectric material is not strictly limited in this application. The inverse piezoelectric effect means that an electric field is applied in a polarization direction of a dielectric, and the dielectric generates mechanical deformation or mechanical pressure in a specific direction. When the applied electric field is removed, the deformation or stress disappears accordingly. In some embodiments, when the piezoelectric material is not energized (a current is 0 or a current is very small), the piezoelectric material is in an initial state; when a positive current is supplied to the piezoelectric material, the piezoelectric material extends and is in an extended state; or when a negative current is supplied to the piezoelectric material, the piezoelectric material contracts and is in a shortened state. In other words, the piezoelectric material deforms based on the applied electrical signal. When the electrical signal is an alternating signal, the piezoelectric material extends and contracts cyclically.

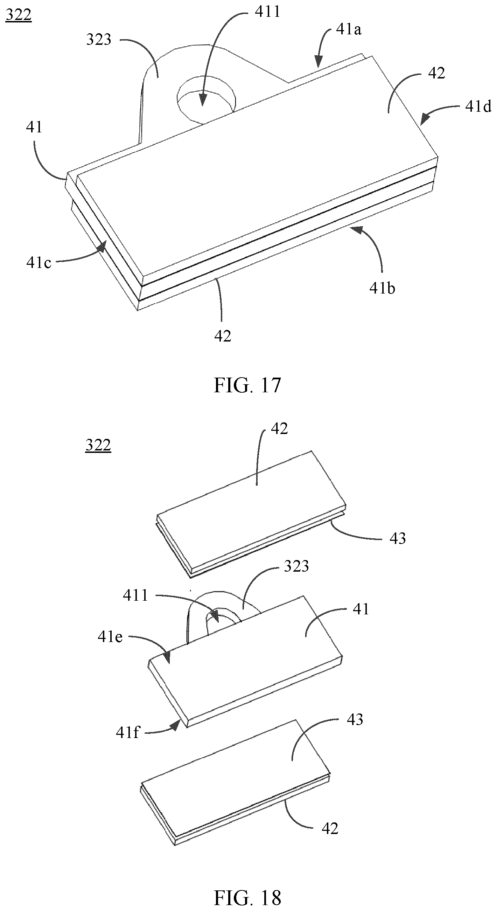

The following further describes in detail a structure and a movement principle of the piezoelectric oscillator in the drive unit with reference to FIG. 17 to FIG. 25.

FIG. 17 is a diagram of a structure of a piezoelectric oscillator. FIG. 18 is a diagram of an exploded structure of a piezoelectric oscillator. As shown in FIG. 17 and FIG. 18, in an embodiment, a piezoelectric oscillator 322 includes a bearing plate 41 and piezoelectric ceramic sheets 42. The bearing plate 41 and the piezoelectric ceramic sheets 42 may be bonded, for example, by using a bonding layer 43, and the bonding layer 43 may be, for example, an epoxy resin layer or a conductive adhesive layer. The bearing plate 41 is of a plate structure, for example, may be of a rectangular plate structure. The bearing plate 41 may be a metal plate, has a specific rigidity, and can meet a requirement for fastening the piezoelectric ceramic sheets 42 and implementing vibration. Two long sides of the bearing plate 41 are respectively a first side edge 41a and a second side edge 41b, and two short sides are respectively a third side edge 41c and a fourth side edge 41d. The bearing plate 41 includes a first surface 41e and a second surface 41f, and both the first surface 41e and the second surface 41f are parallel to a base.

Refer to FIG. 17 and FIG. 18. In an embodiment, a driving part 323 of the piezoelectric oscillator 322 is a first protrusion part formed by an outward protrusion of the first side edge 41a of the bearing plate 41, and the first protrusion part is symmetrically disposed along a perpendicular bisector of the first side edge 41a. The first protrusion part is a triangular cantilever, and a pressing surface that is of the triangular cantilever and that is used to press against the friction piece may be a curved surface or a plane. When the pressing surface is a curved surface, the pressing surface may be a concave curved surface or a convex curved surface. In some embodiments, a pressing surface that is of the driving part 323 and that is used to press against the friction piece is a convex cambered surface, to better be in contact with the friction piece.

Still refer to FIG. 17 and FIG. 18. In some embodiments, the driving part 323 may be provided with a hole 411, and the hole 411 may be a second through hole that penetrates the driving part in an axial direction of a first through hole. A shape of the hole 411 of the driving part 323 may be a circle, a square, a triangle, or the like. This is not specifically limited herein. An amplitude of the driving part 323 may be amplified by disposing the hole 411.

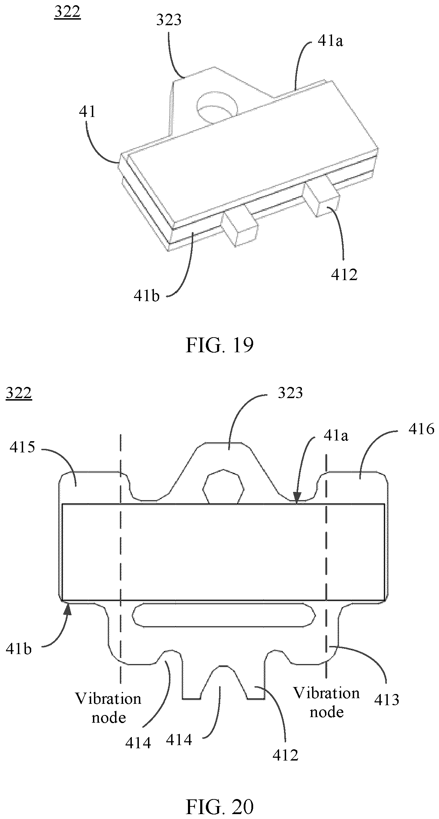

FIG. 19 is a diagram of a structure of another piezoelectric oscillator. As shown in FIG. 19, a difference between the piezoelectric oscillator and the piezoelectric oscillator shown in FIG. 17 lies in that a second side edge 41b of a bearing plate 41 is provided with a connecting piece 412, and the connecting piece 412 is configured to be connected to a connection assembly of a drive unit. The connecting piece 412 may be an insertion part formed by an outward extension of the second side edge 41b of the bearing plate 41, and a quantity of insertion parts may be two. A connection point between each insertion part and the bearing plate 41 on the second side edge 41b is a vibration node of the bearing plate 41. After a piezoelectric oscillator 322 is connected to the connection assembly, impact of the connection assembly on vibration of the piezoelectric oscillator 322 may be reduced.

FIG. 20 is a diagram of a structure of another piezoelectric oscillator. As shown in FIG. 20, a difference between the piezoelectric oscillator and the piezoelectric oscillator shown in FIG. 17 lies in that one side of a second side edge 41b of a bearing plate 41 may be provided with a beam 413, and a connection point between the beam 413 and the second side edge 41b is a vibration node of the bearing plate 41. The connection point between the beam 413 and the bearing plate 41 is disposed on the vibration node of the bearing plate 41, so that a clamping acting force between a connection assembly and a piezoelectric oscillator 322 can be applied to the vibration node. This can reduce impact of the connection assembly on vibration of the piezoelectric oscillator 322 and improve output performance of the piezoelectric oscillator 322. Still refer to FIG. 20. In some embodiments, a notch 414 may be disposed on the beam 413 to reduce adverse vibration of the beam 413. It may be understood that the beam 413 and the notch 414 may be symmetrically disposed along a perpendicular bisector of the second side edge 41b, so that a weight of the beam 413 is symmetrically distributed along the perpendicular bisector of the second side edge 41b. The beam 413 may be provided with a connecting piece 412 (for example, an insertion part), and is connected to a connection assembly (for example, a vertical plate) by using the connecting piece 412.

Still refer to FIG. 20. The bearing plate 41 is further provided with a second protrusion part 415 and a third protrusion part 416, where the second protrusion part 415 and the third protrusion part 416 are symmetrically disposed on two sides of a driving part 323 along a perpendicular bisector of a first side edge 41a. The second protrusion part 415 and the third protrusion part 416 are disposed on the two sides of the driving part 323 as counterweights, so that the weight of the beam 413 can be balanced, so that a total weight of the first side edge 41a of the bearing plate 41 is close to or equal to a total weight of the second side edge 41b. This can increase an amplitude of the driving part 323. The second protrusion part 415 and the third protrusion part 416 may be entirely disposed on the first side edge 41a of the bearing plate 41, and may be formed by protrusions of the first side edge 41a of the bearing plate 41.

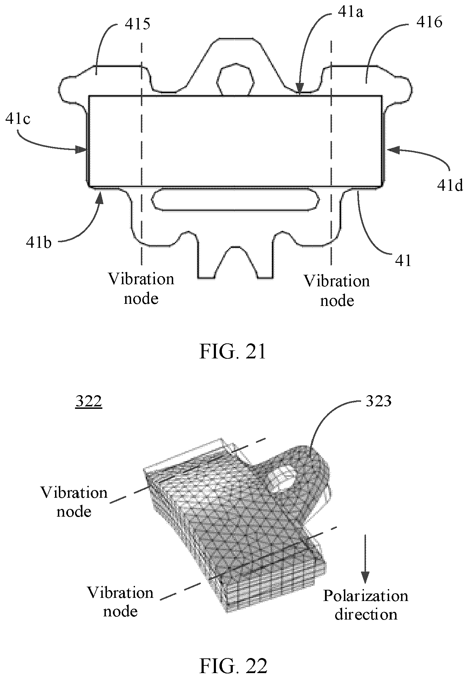

FIG. 21 is a diagram of a structure of another piezoelectric oscillator. A difference from the piezoelectric oscillator shown in FIG. 20 lies in that a second protrusion part 415 and a third protrusion part 416 are disposed at different positions. When sizes of the second protrusion part 415 and the third protrusion part 416 are large and cannot be entirely disposed on a first side edge 41a of a bearing plate 41, the second protrusion part 415 and the third protrusion part 416 may be further disposed on a third side edge 41c and a fourth side edge 41d of the bearing plate 41, to fully utilize space of the bearing plate 41. FIG. 20 and FIG. 21 are only examples of descriptions of the second protrusion part 415 and the third protrusion part 416. Shapes and specific disposition positions of the second protrusion part 415 and the third protrusion part 416 are not specifically limited in this application, provided that weights of the first side edge 41a and the second side edge 41b of the bearing plate 41 can be balanced as much as possible.

Refer to FIG. 17 and FIG. 18. The piezoelectric ceramic sheets 42 may be disposed on both the first surface 41e and the second surface 41f of the bearing plate 41. A quantity of piezoelectric ceramic sheets 42 may be two, any piezoelectric ceramic sheet 42 may be a singlelayer piezoelectric ceramic sheet, or may be a multi-layer piezoelectric ceramic sheet, and the two piezoelectric ceramic sheets 42 are respectively disposed on the first surface 41e and the second surface 41f of the bearing plate 41 and are disposed in parallel with the bearing plate 41. The piezoelectric ceramic sheet 42 may be bonded to the bearing plate 41 by using epoxy resin, a conductive adhesive, or the like. The two piezoelectric ceramic sheets 42 may be two piezoelectric ceramic sheets 42 whose deformation directions are opposite. For example, when a first electrical signal is applied to the two piezoelectric ceramic sheets 42, one piezoelectric ceramic sheet 42 extends and is in an elongated state, and the other piezoelectric ceramic sheet 42 shrinks and is in a shortened state. In this way, a piezoelectric oscillator may bend and vibrate.

FIG. 22 is a diagram of a vibration mode of a piezoelectric oscillator. A direction shown in FIG. 22 is used as an example. Refer to FIG. 17. The piezoelectric ceramic sheets 42 are disposed on an upper surface and a lower surface of the bearing plate 41 respectively, and a polarization direction of the piezoelectric ceramic sheet 42 may be, for example, a direction perpendicular to the bearing plate. When a first electrical signal is applied to the piezoelectric ceramic sheet 42, the piezoelectric ceramic sheet 42 above the bearing plate 41 is in a shrinking state, the piezoelectric ceramic sheet 42 below the bearing plate 41 is in an elongated state, and the piezoelectric oscillator 322 bends upwards, to drive the driving part 323 to move in the first direction. When a second electrical signal is applied to the piezoelectric ceramic sheets 42, the piezoelectric ceramic sheet 42 above the bearing plate 41 is in an elongated state, the piezoelectric ceramic sheet 42 below the bearing plate 41 is in a shrinking state, and the piezoelectric oscillator 322 as a whole may bend downwards, to drive the driving part 323 to move in the second direction.

As described above, when the piezoelectric oscillator 322 vibrates, an electrical signal needs to be applied. Therefore, an electrode of the piezoelectric oscillator 322 needs to be connected to an external circuit. Refer to FIG. 3. In this application, a flexible circuit board 25 may be disposed in the piezoelectric motor 20. The flexible circuit board 25 serves as an electrical connection bridge between the piezoelectric oscillator 322 and the external circuit, and an electrical signal is applied to the piezoelectric ceramic sheet 42 to implement vibration of the piezoelectric oscillator 322.

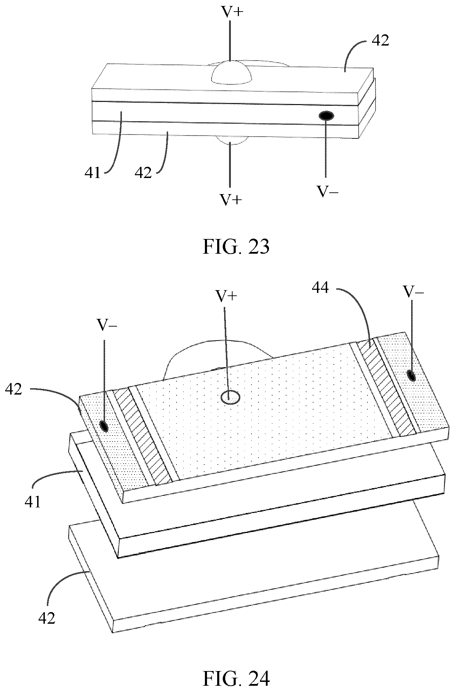

FIG. 23 is a diagram of an electrode connection relationship of a piezoelectric oscillator. As shown in FIG. 23, each piezoelectric ceramic sheet 42 may be provided with two electrodes: a positive electrode and a negative electrode, where one electrode is disposed on a surface (referred to as an inner side surface) that is of the piezoelectric ceramic sheet 42 and that is close to a bearing plate 41, and the other electrode is disposed on a surface (referred to as an outer side surface) that is of the piezoelectric ceramic sheet 42 and that is away from the bearing plate 41. One of the positive electrode and the negative electrode of each piezoelectric ceramic sheet 42 may be led out through the bearing plate 41, and the other electrode may be led out from an outer surface of the piezoelectric ceramic sheet 42. For example, the negative electrode of the piezoelectric ceramic sheet 42 may be led out through the bearing plate 41, and the positive electrode of the piezoelectric ceramic sheet 42 may be led out from the outer surface of the piezoelectric ceramic sheet 42. When the electrode is led out through the bearing plate 41, the bearing plate 41 and the inner surface of the piezoelectric ceramic sheet 42 may be bonded by using a conductive adhesive or an epoxy resin adhesive. It may be understood that positions of the positive electrode and the negative electrode shown in FIG. 24 are only examples for description, and the positions of the two electrodes may be exchanged.

FIG. 24 is a diagram of an electrode connection relationship of another piezoelectric oscillator. As shown in FIG. 24, in an embodiment, an electrode on an inner surface of a piezoelectric ceramic sheet 42 may be led out to an outer surface of the piezoelectric ceramic sheet 42 by electrode extension and wrapping. For example, an electrode on an inner side surface is led out to the outer surface of the piezoelectric ceramic sheet 42 by covering one or two short edges of the piezoelectric ceramic sheet with the electrode. Electrode extension and wrapping are symmetrically performed on the two short edges. This can ensure symmetry of a structure, and the positive electrode and the negative electrode on the outer surface can be directly connected during a circuit connection. When both the positive electrode and the negative electrode of the piezoelectric ceramic sheet 42 are disposed on the outer surface, a ceramic surface between the positive electrode and the negative electrode is not covered with an electrode, to ensure a specific insulation distance. For example, an insulation tape 44 may be disposed on the outer surface of the piezoelectric ceramic sheet 42, and the insulation tape 44 may be, for example, an insulation isolation layer or an insulation isolation groove disposed on the outer surface of the piezoelectric ceramic sheet 42, to prevent a short circuit between the positive electrode and the negative electrode. Positions of the positive electrode and the negative electrode shown in FIG. 24 are only examples for description, and the positions of the two electrodes may be exchanged. When a circuit connection is performed, the piezoelectric oscillator may be connected to an external circuit by using the flexible circuit board 25 (refer to FIG. 4). Refer to FIG. 3. The flexible circuit board 25 may be fastened to the base 21, and the positive electrode and the negative electrode of the piezoelectric oscillator 322 may be separately connected to the flexible circuit board 25 by using a surface mount technology, an anisotropic conductive film, or the like.

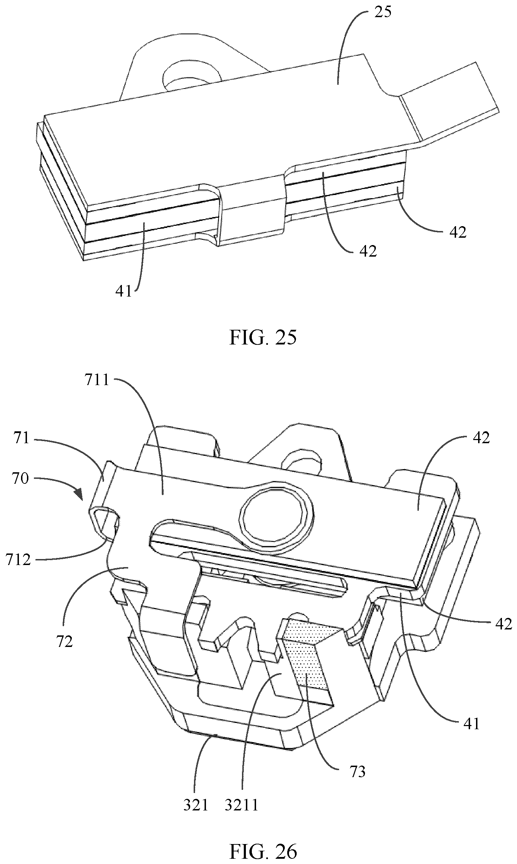

FIG. 25 is a diagram of a connection structure between a piezoelectric oscillator and a flexible circuit board according to an embodiment. As shown in FIG. 25, when both a positive electrode and a negative electrode of a piezoelectric ceramic sheet 42 are led out from an outer surface of the piezoelectric ceramic sheet 42, a flexible circuit board 25 may be coated on the outer surface of the piezoelectric ceramic sheet 42. In this case, an electrical connection point may be disposed at a part that is of the flexible circuit board 25 and that is configured to be connected to an electrode of a piezoelectric oscillator, so that the flexible circuit board 25 and the electrode of the piezoelectric oscillator are electrically connected. A connection manner is particularly applicable to a case in which both the positive electrode and the negative electrode are disposed on the outer surface of the piezoelectric ceramic sheet 42. In this way, a connection is easy, a connection line from the piezoelectric oscillator to the flexible circuit board 25 may be saved, and the connection is more secure.

The flexible circuit board 25 may serve as a connection bridge between the piezoelectric oscillator and the external circuit, and may further be connected to a controller of an electronic device, and is configured to send an electrical signal that drives the piezoelectric oscillator to vibrate. Refer to FIG. 3. The piezoelectric motor 20 in this application may further include a position sensor 26. The position sensor 26 may be connected to the flexible circuit board 25. The position sensor 26 is configured to sense a relative position of the mobile carrier and the base, to transmit a signal for detection to the controller of the electronic device by using the flexible circuit board 25. The controller controls whether the mobile carrier needs to be driven to move, and determines a movement amount. The position sensor may be an induced magnet.

FIG. 26 is a diagram of a connection structure of a piezoelectric oscillator according to another embodiment. As shown in FIG. 26, two piezoelectric ceramic sheets 42 of a piezoelectric oscillator 322 may be respectively fastened to two sides of a bearing plate 41. For a structure of the bearing plate 41, refer to related structures in FIG. 20 and FIG. 21. Details are not described herein again. One end of the bearing plate 41 may be fastened to a vertical plate 3211 of a connection assembly 321.

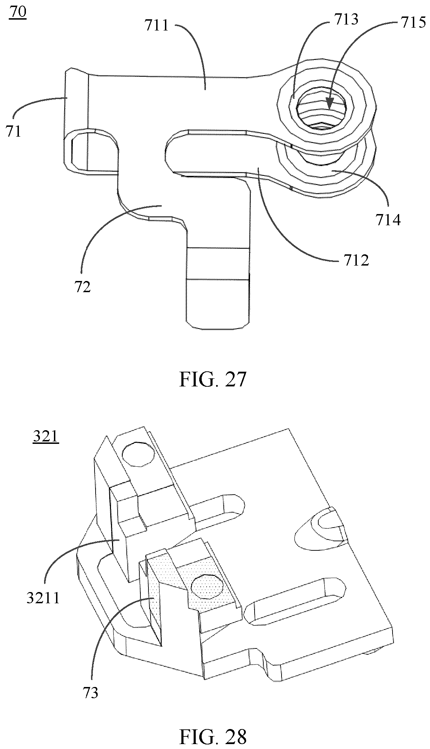

As shown in FIG. 26, an electrode lead-out end of the piezoelectric ceramic sheet 42 of the piezoelectric oscillator 322 in this embodiment of this application may be led out to a position of the connection assembly 321 by using a clamping spring plate 70. FIG. 27 is a diagram of a structure of a clamping spring plate. Refer to FIG. 26 and FIG. 27 together. The clamping spring plate 70 includes a U-shaped clamping part 71 and a third connection arm 72 connected to the U-shaped clamping part 71. The U-shaped clamping part 71 may include a first clamping jaw 711 and a second clamping jaw 712 that are connected to each other. Positions shown in FIG. 26 and FIG. 27 are used for description. The first clamping jaw 711 is clamped on a surface of a piezoelectric ceramic sheet 42 on a front side of the bearing plate 41, and the second clamping jaw 712 is clamped on a surface of a piezoelectric ceramic sheet 42 on a back side of the bearing plate 41. A clamping part of the first clamping jaw 711 may be provided with a first clamping protrusion 713, and a clamping part of the second clamping jaw 712 may be provided with a second clamping protrusion 714. A direction shown in FIG. 27 is used as an example. A protrusion direction of the first clamping protrusion 713 is downward, and a protrusion direction of the second clamping protrusion 714 is upward. When the U-shaped clamping part 71 is clamped on surfaces of the piezoelectric oscillator, the first clamping protrusion 713 is in contact with the piezoelectric ceramic sheet 42 on the front side, and the second clamping protrusion 714 is in contact with the piezoelectric ceramic sheet 42 on the back side. Other areas of the U-shaped clamping part 71 are not in contact with the piezoelectric oscillator, to reduce a limitation on vibration of the piezoelectric oscillator.

To improve reliability of connecting the first clamping protrusion 713 and the second clamping protrusion 714 to the piezoelectric ceramic sheets 42, in an embodiment, the first clamping protrusion 713 and the second clamping protrusion 714 each may be provided with a through hole 715. During fastening, the through hole 715 may be filled with solder or a conductive adhesive, and the reliability of connecting the first clamping jaw 711 and the second clamping jaw 712 to the piezoelectric oscillator is increased in a manner of soldering or bonding.

The through hole 715 of the first clamping protrusion 713 and the through hole 715 of the second clamping protrusion 714 each are disposed at a central position of the piezoelectric ceramic sheets 42. The position is a wave peak position of a vibration mode of the piezoelectric ceramic sheet 42, to reduce impact of an additional weight like the clamping spring plate 70, the solder, or the conductive adhesive on vibration of the piezoelectric oscillator.

Still refer to FIG. 26 and FIG. 27. The third connection arm 72 of the clamping spring plate 70 may be a bent connection arm. One end of the third connection arm 72 is connected to the U-shaped clamping part 71, and the other end is connected to the vertical plate 3211 of the connection assembly 321. One end that is of the third connection arm 72 and that is connected to the vertical plate 3211 is configured to be connected to an external circuit, to serve as an electrode connection point of the piezoelectric oscillator.

Still refer to FIG. 26. In an embodiment, another electrode of the piezoelectric oscillator may be led out through the bearing plate 41. The bearing plate 41 may be a conductive bearing plate or two side surfaces of the bearing plate 41 is coated with a conductive coating. The bearing plate 41 is fastened to the vertical plate 3211 of the connection assembly 321. FIG. 28 is a diagram of a structure of a connection assembly 321 according to an embodiment. As shown in FIG. 26 and FIG. 28, a conductive circuit board 73 may be disposed at a position that is of the vertical plate 3211 and that is used to be connected to the bearing plate 41. The conductive circuit board 73 is configured to be connected to an external circuit, to serve as another electrode connection point of a piezoelectric oscillator. For the piezoelectric oscillator in the structure embodiments shown in FIG. 26 to FIG. 28, when a drive signal is applied, a positive electrode and a negative electrode of the drive signal may be respectively connected to the third connection arm 72 and the conductive circuit board 73.

The foregoing describes a structure and a driving principle of a drive mechanism. The drive mechanism outputs a driving force through friction coupling between a driving part and a friction piece, to drive a mobile carrier to move. The following explains an axial assembly relationship between a mobile carrier and a base.

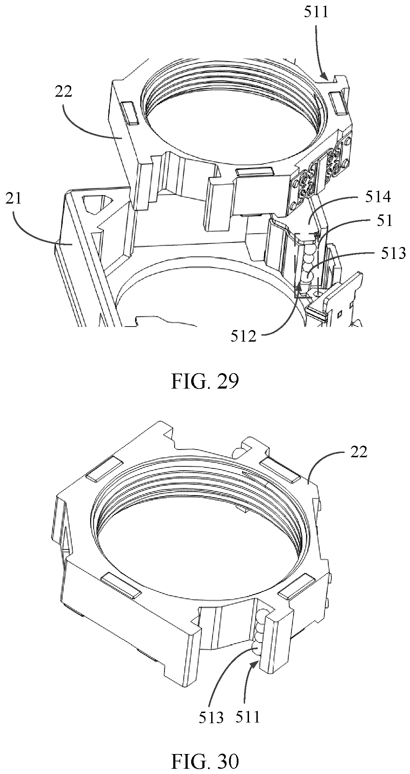

Refer to FIG. 29. To maintain stability of a mobile carrier 22 in a moving process and reduce friction between the mobile carrier 22 and a base 21, the mobile carrier 22 and the base 21 may be connected in a sliding manner through a guiding part 51. The following describes a guiding part 51 between the mobile carrier and the base with reference to FIG. 26 to FIG. 32.

Still refer to FIG. 29. In an embodiment, the guiding part 51 may include a columnar accommodating groove formed by the mobile carrier 22 and the base 21 together and a sliding connecting piece disposed in the columnar accommodating groove. Specifically, an outer circumferential surface of the mobile carrier 22 may be provided with a first groove body 511, a side wall of a mounting groove of the base 21 may be provided with a second groove body 512, and the first groove body 511 and the second groove body 512 are disposed opposite to each other, and may form the columnar accommodating groove. The sliding connecting piece is disposed in the columnar accommodating groove.

FIG. 30 is a diagram of a structure of a first groove body of a mobile carrier. Refer to FIG. 29 and FIG. 30. In an optional embodiment, a sliding connecting piece is a ball 513. There may be a plurality of balls 513, and the plurality of balls 513 may be sequentially arranged in the columnar accommodating groove in a height direction of the columnar accommodating groove. In a sliding process, to prevent the ball 513 from being detached from the columnar accommodating groove, a baffle plate 514 may be disposed on a top of the second groove body 512. For the plurality of balls 513 in the same columnar accommodating groove, a diameter of the ball 513 located at each of a top and a bottom of the columnar accommodating groove is greater than diameters of other balls 513, to reduce pressing contacts between the mobile carrier 22 and the base 21 and reduce sliding resistance. A distance between the ball 513 located at each of the bottom and the top of the columnar accommodating groove and a groove wall of the columnar accommodating groove is less than or equal to 5 µm, so that the mobile carrier 22 maintains good stability during sliding.

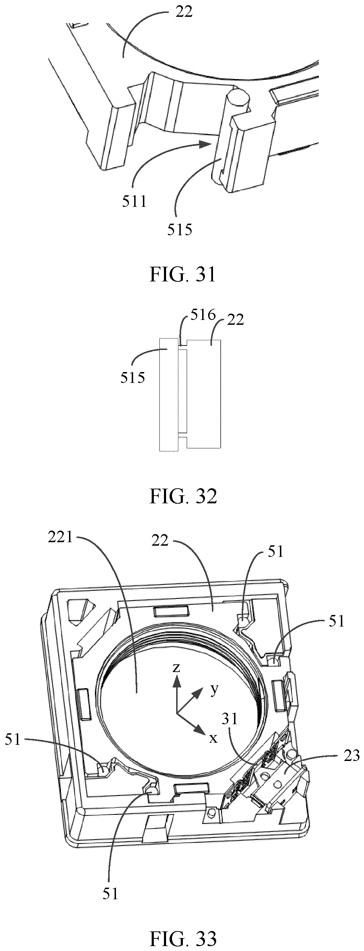

FIG. 31 is a diagram of a structure of a guiding part according to another embodiment of this application. FIG. 32 is a diagram of a contact structure between the guiding part in the structure shown in FIG. 31 and a mobile carrier. As shown in FIG. 31 and FIG. 32, in an embodiment, a sliding connecting piece may be a sliding bar 515, the sliding bar 515 is fastened to a base 21, and a protruding sliding part 516 configured to be slidably connected to the sliding bar 515 is disposed on a surface of a first groove body 511 of a mobile carrier 22. A surface (referred to as a sliding surface below) that is of the sliding part 516 and that is used to be in contact with the sliding bar 515 is a cambered surface or a plane. When the sliding surface of the sliding part 516 is a cambered surface, the sliding surface may be a concave cambered surface, for example, a concave surface that fits a surface of the sliding bar 515, or a convex cambered surface, for example, a convex spherical surface. When the surface is a protruding spherical surface, a contact surface between the mobile carrier 22 and the sliding bar 515 may be reduced, to reduce friction resistance. It may be understood that a quantity of sliding parts 516 may be one, two, three, or more, for example, may be two or more. A specific quantity is not specifically limited herein, provided that stable contact between the sliding bar 515 and the mobile carrier 22 can be ensured.

FIG. 33 is a diagram of a structure of a piezoelectric motor according to an embodiment. As shown in FIG. 33, in an embodiment, a plurality of guiding parts 51 may be disposed, for example, two, three, four, or more, and preferably two, four, or another even number of guiding parts 51 may be disposed. The plurality of guiding parts 51 may be symmetrically disposed in a direction (namely, a direction x shown in FIG. 33) of pre-pressure. Every two of the plurality of guiding parts 51 form one group, and a connection line (the connection line is located in a direction y in FIG. 33) between two guiding parts 51 in any group is perpendicular to the pre-pressure direction. In this way, friction forces of the guiding parts 51 in any group are equal. This can ensure mechanical balance of structures on two sides of pre-pressure, and prevent the mobile carrier 22 from rotating around the direction (the direction x shown in FIG. 33) of the pre-pressure.

Still refer to FIG. 33. A pressing contact between a friction piece 31 and a drive mechanism 23 is used as a reference point, and in a circumferential direction of a first through hole 221, at least two guiding parts 51 are disposed at a distance from the reference point that is between 1/5 of circumference and 1/2 of circumference. In a driving process of a piezoelectric motor, a driving force applied by the drive mechanism 23 in a direction z applies torque around an axis y to the mobile carrier 22. A closer guiding part 51 to the drive mechanism 23 indicates a shorter arm of force and smaller generated torque around the axis y. Therefore, the guiding part 51 is disposed close to the pressing contact between the friction piece 31 and the drive mechanism 23, so that mechanical stability of an entire structure can be improved. Still refer to FIG. 33. In an optional embodiment, there may be four guiding parts 51, and the guiding parts 51 may be divided into two guiding groups that are respectively a main guiding group and a secondary guiding group. The two guiding parts 51 in the main guiding group are disposed close to a pressing contact of the drive mechanism 23 and the friction piece 31, and the two guiding parts 51 in the secondary guiding group are disposed away from the pressing contact. In this way, structural stability of the piezoelectric motor can be further improved, and it is ensured that the mobile carrier 22 moves smoothly. When the sliding connecting piece is a ball, in at least one group of guiding parts 51, a distance between the ball 513 located at each of the bottom and the top of the columnar accommodating groove and a groove wall of the columnar accommodating groove is less than or equal to 5 µm, so that the mobile carrier 22 maintains good stability during sliding.

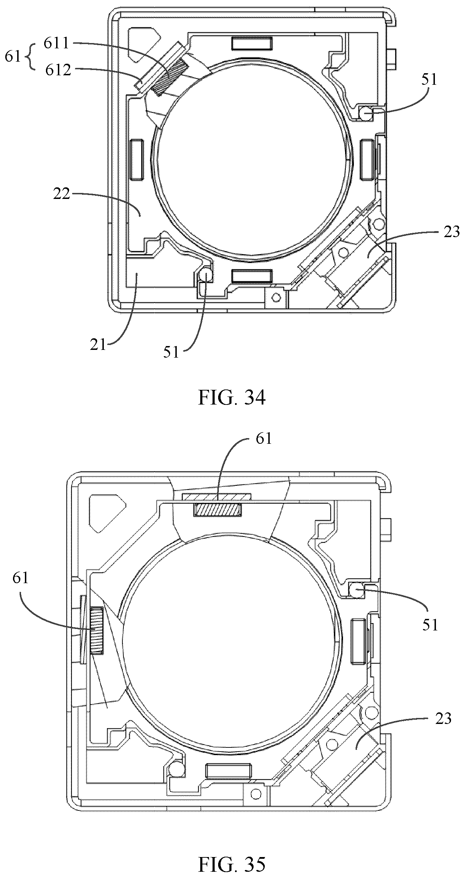

FIG. 34 is a diagram of a structure of a piezoelectric motor. As shown in FIG. 34, in an embodiment, the piezoelectric motor further includes a magnetic attachment assembly 61. An acting force applied by the magnetic attachment assembly 61 to a guiding part 51 is in a same direction as an acting force applied by pre-pressure to the guiding part 51. In this way, in a direction of the pre-pressure, the magnetic attachment assembly 61 can apply torque to a mobile carrier 22, and the torque is opposite to torque applied by a drive mechanism 23 to the mobile carrier 22.

Refer to FIG. 34. In an embodiment, the magnetic attachment assembly 61 includes a magnet 611 and a magnetic sheet 612, one of the magnet 611 and the magnetic sheet 612 is disposed on a base 21, and the other is disposed on the mobile carrier 22. There may be one group, two groups, or a plurality of groups of magnetic attachment assemblies 61. When there is one group of magnetic attachment assembly 61, the magnetic attachment assembly 61 may be disposed at a diagonal of the drive mechanism 23, and a magnetic attracting force generated by the magnetic attachment assembly 61 may be consistent with the direction of the pre-pressure.

FIG. 35 is a diagram of a structure of another piezoelectric motor. As shown in FIG. 35, when there are a plurality of groups of magnetic attachment assemblies 61, for example, two groups of magnetic attachment assemblies 61, the two groups of magnetic attachment assemblies 61 may be respectively disposed on two sides of a direction of pre-pressure, and a combined force generated by the two groups of magnetic attachment assemblies 61 may be in a same direction as pre-pressure. A magnetic attracting force provided by the magnetic attachment assembly 61 may form a tilt correction force, and generated magnetic attachment torque may overcome rotating torque generated by gravity torque, pre-pressure torque, and friction driving torque, to maintain architecture balance.

The foregoing separately describes structures and interconnection relationships of the base 21, the mobile carrier 22, and the drive mechanism 23. The following describes an entire driving process of a piezoelectric motor.

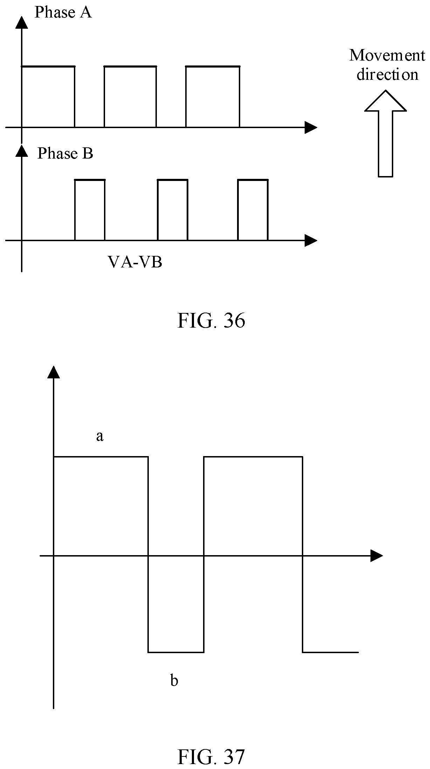

FIG. 36 is a diagram of a phase-A signal and a phase-B signal applied to a positive electrode and a negative electrode of a piezoelectric oscillator according to an embodiment. FIG. 37 is a diagram of a waveform applied to a piezoelectric oscillator. As shown in FIG. 36, the phase-A pulse signal is applied to one of the positive electrode and the negative electrode of the piezoelectric oscillator, and a duty cycle of the phase-A pulse signal is x (x/50%). The phase-B pulse signal having a same frequency as the phase-A pulse signal is applied to the other one of the positive electrode and the negative electrode, and a duty cycle of the phase-B pulse signal is 1-x. A drive signal obtained by combining the two pulse signals is an asymmetric square wave signal having positive and negative voltages shown in FIG. 34. After the drive signal shown in FIG. 37 is applied to the piezoelectric oscillator, a mobile carrier may be driven by the piezoelectric oscillator to move in a first direction. A specific driving process is as follows: When an electrical signal applied to the piezoelectric oscillator is a first electrical signal (V+), namely, a phase-a time domain signal in FIG. 37, a driving part of the piezoelectric oscillator bends toward the first direction, and in this case, the mobile carrier may be driven to move toward the first direction by using a friction piece. When an electrical signal applied to the piezoelectric oscillator changes from the first electrical signal to a second electrical signal (V-), that is, at a moment of a corresponding phase-b time domain signal in FIG. 34, the driving part of the piezoelectric oscillator may bend in a second direction (where the second direction is opposite to the first direction). In this case, because the mobile carrier further has a specific moving speed in the first direction, the mobile carrier may move in the first direction for a specific distance under an action of inertial movement, and after the moving speed of the mobile carrier is zero, the mobile carrier is driven by the driving part to move in the second direction, and so on. In the drive signal, loading time of the phase-a time domain signal is greater than loading time of the phase-b time domain signal. Therefore, the mobile carrier moves toward the first direction as a whole.

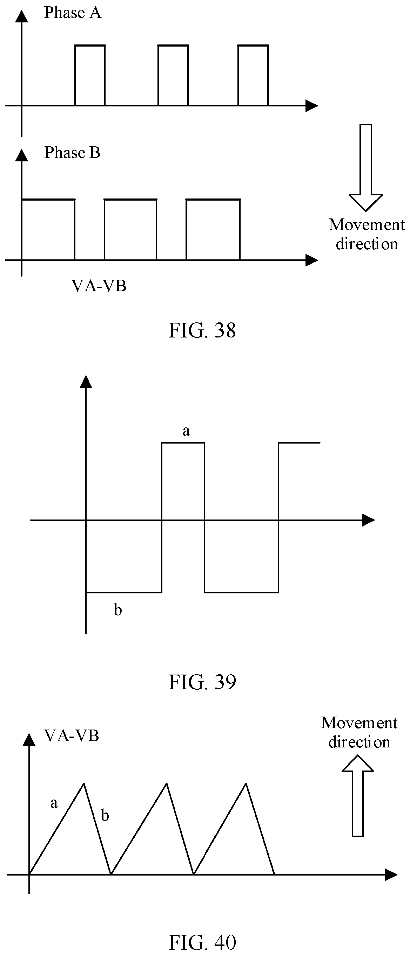

FIG. 38 is a diagram of a phase-A signal and a phase-B signal applied to a positive electrode and a negative electrode of a piezoelectric oscillator according to an embodiment. FIG. 39 is a diagram of a waveform applied to a piezoelectric oscillator. As shown in FIG. 38, the phase-A pulse signal is applied to one of the positive electrode and the negative electrode of the piezoelectric oscillator, and a duty cycle of the phase-A pulse signal is x (x/50%). The phase-B pulse signal having a same frequency as the phase-A pulse signal is applied to the other one of the positive electrode and the negative electrode, and a duty cycle of the phase-B pulse signal is 1-x. A drive signal obtained by combining the two pulse signals is an asymmetric square wave signal shown in FIG. 36. After the drive signal shown in FIG. 38 is applied to the piezoelectric oscillator, a mobile carrier may be driven by the piezoelectric oscillator to move in a second direction. A specific driving process is as follows: When an electrical signal applied to the piezoelectric oscillator is a first electrical signal (V-), namely, a phase-b time domain signal in FIG. 38, a driving part of the piezoelectric oscillator bends toward the second direction, and in this case, the mobile carrier may be driven to move in the second direction by using a friction piece. When an electrical signal applied to the piezoelectric oscillator changes from the first electrical signal to a second electrical signal (V+), that is, at a moment of a corresponding phase-a time domain signal in FIG. 38, the driving part of the piezoelectric oscillator may bend in a first direction (where the first direction is opposite to the second direction). In this case, because the mobile carrier further has a specific moving speed in the second direction, the mobile carrier may move in the second direction for a specific distance under an action of inertial movement, and after the moving speed of the mobile carrier is zero, the mobile carrier is driven by the driving part to move in the first direction, and so on. In the drive signal, loading time of the phase-b time domain signal is greater than loading time of the phase-a time domain signal. Therefore, the mobile carrier moves toward the second direction as a whole.

In addition, in addition to the square wave signal, a signal applied to the piezoelectric oscillator may alternatively be a triangular wave signal shown in FIG. 40, and symmetry of the triangular wave signal applied to the piezoelectric oscillator is not 50%.

As shown in FIG. 40, the triangular wave signal also includes a phase-a time domain signal and a phase-b time domain signal. When the phase-a time domain signal is applied to the piezoelectric oscillator, the driving part drives the mobile carrier to move in the first direction. When the phase-a time domain signal is converted into the phase-b time domain signal, the driving part moves back in the second direction. Because the mobile carrier further has a specific moving speed in the first direction, the mobile carrier further moves in the first direction for a specific distance under an action of inertia movement. After the moving speed of the mobile carrier is zero, the mobile carrier is driven by the driving part to move in the first direction under, and so on. Because loading time of the phase-a time domain signal is greater than loading time of the phase-b time domain signal, the mobile carrier moves toward the first direction as a whole.

In the triangular wave signal shown in FIG. 40, after the loading time of the phase-a time domain signal and the loading time of the phase-b time domain signal are exchanged, the loading time of the phase-a time domain signal may be less than the loading duration of the phase-b time domain signal. In this way, the mobile carrier moves toward the second direction as a whole.

It may be understood that the foregoing two types of drive signals are only examples for description, and vibration of the piezoelectric oscillator can be excited and a mobile carrier can be moved provided that a high-frequency periodic signal that is not symmetrical in a period is applied between two electrodes of the piezoelectric oscillator.

In conclusion, the piezoelectric motor in this application can implement high-precision, fast-response, large-stroke (>5 mm), large-load (g-level), anti-shake, and even non-shake auto focus, to meet a use requirement of an electronic device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A piezoelectric motor, comprising a base, a mobile carrier, and a drive mechanism, wherein
the base has a mounting groove;
the mobile carrier is disposed in the mounting groove and is circumferentially fastened to the base, the mobile carrier is provided with a first through hole, and the mobile carrier is slidably connected to the base in an axial direction of the first through hole; and
the drive mechanism is configured to drive the mobile carrier to move back and forth in the axial direction of the first through hole, and the drive mechanism comprises a friction piece, a drive unit, and an elastic connecting piece, wherein
the friction piece is disposed on a peripheral surface of the mobile carrier;
the drive unit comprises a connection assembly and a piezoelectric oscillator connected to the connection assembly, wherein the connection assembly is connected to the base, the piezoelectric oscillator is provided with a driving part, and when the piezoelectric oscillator moves, the driving part can move back and forth in the axial direction of the first through hole; and
the elastic connecting piece can provide pre-pressure that enables the driving part to press against the friction piece in a direction perpendicular to the axial direction of the first through hole, so that when the driving part vibrates, the driving part drives, by using the friction piece, the mobile carrier to move back and forth in the axial direction of the first through hole, wherein
a first electrical signal is applied to the piezoelectric oscillator, and the mobile carrier is driven by the driving part to move in a first direction; and then a second electrical signal is applied to the piezoelectric oscillator, the driving part moves in a second direction, and under an action of inertia movement, the mobile carrier decelerates in the first direction and then moves in the second direction along with the driving part, wherein the first direction is opposite to the second direction, and the first electrical signal and the second electrical signal have different loading time.

2. The piezoelectric motor according to claim 1, wherein the mobile carrier is slidably connected to the base through a guiding part.

3. The piezoelectric motor according to claim 2, wherein the guiding part comprises a first groove body disposed on the mobile carrier, a second groove body disposed on the base, and a sliding connecting piece, the first groove body and the second groove body are disposed opposite to each other, the first groove body and the second groove body jointly form a columnar accommodating groove, and the sliding connecting piece is disposed in the columnar accommodating groove.

4. The piezoelectric motor according to claim 3, wherein the sliding connecting piece is a ball, the ball is located in the columnar accommodating groove, and a baffle plate for preventing the ball from sliding out is disposed on the second groove body at an opening of the columnar accommodating groove.

5. The piezoelectric motor according to claim 4, wherein there are a plurality of balls in the columnar accommodating groove, the plurality of balls are sequentially disposed in the axial direction of the first through hole, and in the columnar accommodating groove, a diameter of a ball located at each of a bottom and a top of the columnar accommodating groove is greater than diameters of remaining balls in the columnar accommodating groove.

6. The piezoelectric motor according to claim 5, wherein a distance between the ball located at each of the bottom and the top of the columnar accommodating groove and a groove wall of the columnar accommodating groove is less than or equal to 5 µm.

7. The piezoelectric motor according to claim 3, wherein the sliding connecting piece is a sliding bar, the sliding bar is fastened to the base, and a protruding sliding part configured to be slidably connected to the sliding bar is disposed on a surface of the first groove body.

8. The piezoelectric motor according to claim 7, wherein a surface that is of the sliding part and that is used to be in contact with the sliding bar is a cambered surface.

9. The piezoelectric motor according to any one of claims 2 to 8, wherein there are at least two guiding parts, the guiding parts are symmetrically distributed in a direction of the pre-pressure, and the direction of the pre-pressure is set in a radial direction of the first through hole.

10. The piezoelectric motor according to any one of claims 1 to 9, wherein a pressing contact between the driving part and the friction piece is used as a reference point, and in a circumferential direction of the first through hole, the at least two guiding parts are disposed at a distance from the reference point that is between 1/5 of circumference and 1/2 of circumference.

11. The piezoelectric motor according to any one of claims 1 to 10, wherein the piezoelectric motor further comprises a magnetic attachment assembly, and in the direction of the pre-pressure, the magnetic attachment assembly can apply, on the mobile carrier, torque opposite to torque applied by the drive unit to the mobile carrier.

12. The piezoelectric motor according to claim 11, wherein the magnetic attachment assembly comprises a magnet and a magnetic sheet, one of the magnet and the magnetic sheet is disposed on the base, and the other is disposed on the mobile carrier.

13. The piezoelectric motor according to any one of claims 1 to 12, wherein the elastic connecting piece is disposed between the mobile carrier and the friction piece, and the elastic connecting piece is in a force accumulation state to provide, in the direction perpendicular to the axial direction of the first through hole, an acting force for the friction piece to approach the driving part, so that the friction piece presses against the driving part.

14. The piezoelectric motor according to claim 13, wherein the elastic connecting piece comprises a spring plate, an avoidance groove is disposed on an outer circumferential surface of the mobile carrier, the spring plate is fastened to a groove opening of the avoidance groove, and the spring plate bends toward the avoidance groove when the spring plate is in a force accumulation state.

15. The piezoelectric motor according to claim 13 or 14, wherein the connection assembly comprises a vertical plate, and the vertical plate is perpendicular to and fastened to the base.

16. The piezoelectric motor according to any one of claims 1 to 12, wherein the elastic connecting piece is disposed between the base and the drive unit, and the elastic connecting piece is in a force accumulation state to provide, in the direction perpendicular to the axial direction of the first through hole, an acting force for the driving part to approach the friction piece, so that the driving part presses against the friction piece.

17. The piezoelectric motor according to claim 16, wherein the connection assembly comprises a first connection arm, one end of the first connection arm is connected to the piezoelectric oscillator, and the other end is connected to the base;
the elastic connecting piece comprises a spring wire, one end of the spring wire is connected to the piezoelectric oscillator, and the other end is connected to the base; and
the first connection arm and the elastic connecting piece are respectively disposed on two sides of the driving part of the piezoelectric oscillator.

18. The piezoelectric motor according to claim 17, wherein the first connection arm is hinged with the base.

19. The piezoelectric motor according to claim 18, wherein the end that is of the first connection arm and that is configured to be connected to the base is provided with a hinge groove, and the base is provided with a hinge pillar that fits the hinge groove.

20. The piezoelectric motor according to claim 17, wherein the elastic connecting piece further comprises a second connection arm connected to the spring wire, and the spring wire is connected to the base through the second connection arm.

21. The piezoelectric motor according to claim 20, wherein one end that is of the second connection arm that is configured to be connected to the base is provided with a fastening hole, and the base is provided with a protruding pillar that is in a fitting connection to the fastening hole.

22. The piezoelectric motor according to claim 16, wherein the connection assembly comprises a vertical plate and a bottom plate fastened to the vertical plate, the piezoelectric oscillator is connected to the vertical plate, the base and the bottom plate are slidably connected in the direction of the pre-pressure, the elastic connecting piece is disposed between the base and the bottom plate, and the elastic connecting piece is in a pulled state to enable, through the bottom plate, the driving part to press against the friction piece.

23. The piezoelectric motor according to claim 22, wherein the elastic connecting piece comprises a first end part, a second end part, and a serpentine leaf spring or an arch-shaped leaf spring disposed between the first end part and the second end part, the first end part comprises a connection part connected to the base, and the second end part is connected to the bottom plate.

24. The piezoelectric motor according to claim 23, wherein the first end part further comprises a presser, the bottom plate is provided with a pressed protrusion part that fits the presser, and the presser exerts an acting force on the pressed protrusion part toward the base.

25. The piezoelectric motor according to any one of claims 22 to 24, wherein the base is provided with a guide block, and the bottom plate is provided with a guide groove that fits the guide block; or the base is provided with a guide groove, and the bottom plate is provided with a guide block that fits the guide groove.

26. The piezoelectric motor according to any one of claims 1 to 25, wherein the piezoelectric oscillator comprises a bearing plate and piezoelectric ceramic sheets disposed on surfaces of two sides of the bearing plate, and a plate surface of the bearing plate is perpendicular to the axial direction of the first through hole.

27. The piezoelectric motor according to claim 26, wherein the driving part is a first protrusion part disposed on the bearing plate.

28. The piezoelectric motor according to claim 27, wherein the first protrusion part is a triangular cantilever, and a pressing surface that is of the triangular cantilever and that is used to press against the friction piece is a curved surface or a plane.

29. The piezoelectric motor according to claim 27, wherein the first protrusion part is provided with a hole, and the hole penetrates the first protrusion part in the axial direction of the first through hole.

30. The piezoelectric motor according to any one of claims 26 to 29, wherein the bearing plate is of a rectangular structure, the driving part is disposed on a first side edge of the bearing plate, a beam is disposed on a second side edge that is of the bearing plate and that is away from the driving part, and a connection point between the beam and the bearing plate is a vibration node of the bearing plate.

31. The piezoelectric motor according to claim 30, wherein the beam is provided with a notch.

32. The piezoelectric motor according to claim 30, wherein the bearing plate is further provided with a second protrusion part and a third protrusion part, and the second protrusion part and the third protrusion part are symmetrically disposed on two sides of the first protrusion part along a perpendicular bisector of the first side edge.

33. The piezoelectric motor according to any one of claims 26 to 32, wherein the piezoelectric motor further comprises a flexible circuit board, and both a positive electrode and a negative electrode of the piezoelectric ceramic sheet are connected to the flexible circuit board.

34. The piezoelectric motor according to claim 33, wherein one of the positive electrode and the negative electrode of the piezoelectric ceramic sheet is led out from the bearing plate, and the other is disposed on a surface that is of the piezoelectric ceramic plate and that is away from the bearing plate.

35. The piezoelectric motor according to claim 33, wherein both the positive electrode and the negative electrode of the piezoelectric ceramic sheet are led out from a surface that is of the piezoelectric ceramic sheet and that is away from the bearing plate.

36. The piezoelectric motor according to claim 35, wherein the flexible circuit board is separately in contact with surfaces that are of the two piezoelectric ceramic sheets of the bearing plate and that are away from the bearing plate.

37. The piezoelectric motor according to any one of claims 26 to 32, wherein the piezoelectric motor further comprises a clamping spring plate, the clamping spring plate comprises a U-shaped clamping part and a third connection arm connected to the U-shaped clamping part, the U-shaped clamping part is clamped on surfaces of the piezoelectric ceramic sheets on two sides of the piezoelectric oscillator, and the third connection arm is connected to the connection assembly.

38. The piezoelectric motor according to claim 37, wherein the U-shaped clamping part comprises a first clamping jaw and a second clamping jaw, the first clamping jaw presses against one piezoelectric ceramic sheet of the piezoelectric oscillator, and the second clamping jaw presses against the other piezoelectric ceramic sheet of the piezoelectric oscillator.

39. The piezoelectric motor according to claim 38, wherein the first clamping jaw is provided with a first clamping protrusion, the second clamping jaw is provided with a second clamping protrusion, and the first clamping protrusion and the second clamping protrusion are soldered or bonded to the piezoelectric ceramic sheet.

40. The piezoelectric motor according to claim 39, wherein each of the first clamping protrusion and the second clamping protrusion is provided with a through hole, and the through hole is used to be filled with solder or conductive adhesive.

41. The piezoelectric motor according to claim 40, wherein the through hole is disposed corresponding to a geometric center of the piezoelectric ceramic sheet.

42. A camera module, comprising a lens assembly, an image sensor, and the piezoelectric motor according to any one of claims 1 to 41, wherein a mounting groove of a base is a through groove and is disposed coaxially with a first through hole, the first through hole comprises a light entry side and a light exit side in an axial direction of the first through hole, the lens assembly is disposed in the first through hole on the light entry side and is connected to a mobile carrier, and the image sensor is disposed on the light exit side and is fastened to the base.

43. An electronic device, comprising the camera module according to claim 42.
